(19) Europäisches Patentamt
European Patent Office
Office européen des brevets

(11) **EP 3 065 315 B1**

(12) **FASCICULE DE BREVET EUROPEEN**

(45) Date de publication et mention de la délivrance du brevet:
**12.12.2018 Bulletin 2018/50**

(51) Int Cl.:
**H04B 10/54** *(2013.01)*    **H04B 10/50** *(2013.01)*

(21) Numéro de dépôt: **16158125.1**

(22) Date de dépôt: **01.03.2016**

(54) **SYSTEME DE MODULATION PROPRE A GENERER UNE MODULATION D'AMPLITUDE EN QUADRATURE MULTINIVEAUX**

MODULATIONSSYSTEM ZUR ERZEUGUNG VON MEHRSTUFIGER QUADRATUR-AMPLITUDENMODULATION

MODULATING SYSTEM ADPATED TO GENERATE A MULTI-LEVEL QUADRATURE AMPLITUDE MODULATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.03.2015 FR 1551730**

(43) Date de publication de la demande:
**07.09.2016 Bulletin 2016/36**

(73) Titulaires:
• **Commissariat à l'Énergie Atomique et aux Énergies Alternatives
75015 Paris (FR)**
• **Alcatel Lucent
91620 Nozay (FR)**

(72) Inventeurs:
• **MENEZO, Sylvie
38500 VOIRON (FR)**

• **BENINCA DE FARIAS, Giovanni
90460-001 Porto Alegre, RS (BR)**

(74) Mandataire: **Lavoix
2, place d'Estienne d'Orves
75441 Paris Cedex 09 (FR)**

(56) Documents cités:
**US-A1- 2014 328 601    US-B1- 8 588 556**

• **TAKASHI GOH ET AL: "Novel flexible-format optical modulator with selectable combinations of carrier numbers and modulation levels based on silica-PLC and LiNbO 3 hybrid integration", 2011 OPTICAL FIBER COMMUNICATION CONFERENCE AND EXPOSITION AND THE NATIONAL FIBER OPTIC ENGINEERS CONFERENCE (OFC/NFOEC 2011) : LOS ANGELES, CALIFORNIA, USA, 6 - 10 MARCH 2011, IEEE, PISCATAWAY, NJ, USA, 6 mars 2011 (2011-03-06), pages 1-3, XP031946713, ISBN: 978-1-4577-0213-6**

## Description

DOMAINE TECHNIQUE DE L'INVENTION

La présente invention concerne un système de modulation propre à générer une modulation d'amplitude en quadrature multiniveaux susceptible d'être représentée par une constellation à $4^k$ états, k étant un entier positif supérieur ou égal à 2. La présente invention se rapporte également à une architecture associée.

ARRIERE-PLAN DE L'INVENTION

Dans le domaine des transmissions optiques, il est connu d'utiliser des techniques de modulation pour transmettre des symboles portant un ou plusieurs bit(s) d'information. Les techniques de modulation permettent de coder un ou plusieurs bit(s) sur l'amplitude et/ou la phase du champ d'une porteuse optique.

Parmi les techniques de modulations, les modulations d'amplitude en quadrature multiniveaux sont particulièrement intéressantes. De telles techniques de modulation sont dites M-QAM pour M-quadrature amplitude modulation où $M = 2^k$ et k est un nombre entier supérieur ou égal à 1. L'entier k représente le nombre de bits par symbole.

Il existe différents systèmes pour réaliser de telles modulations d'amplitude dites multiniveaux.

Il est notamment connu d'utiliser un système de modulation comprenant des modulateurs Mach-Zehnder en configuration dit I-Q. Le système de modulation comporte un diviseur de puissance optique avec une entrée vers deux sorties, chacune couplée à, un modulateur Mach-Zehnder, chacune des sorties des modulateurs Mach-Zehnder étant couplée aux deux entrées d'un combineur de puissance optique (deux entrées vers une sortie). Le diviseur de puissance optique d'entrée sépare une porteuse optique incidente, en deux ondes de puissance divisée par 2, chaque onde alimentant un modulateur Mach-Zehnder respectif. Chacun de ces deux modulateurs Mach-Zehnder génère une modulation d'amplitude pure à N niveaux, N étant un nombre entier. L'onde se propageant dans le deuxième modulateur Mach-Zehnder est déphasée par rapport à l'onde se propageant dans le premier modulateur Mach-Zehnder à l'aide d'une unité de déphasage adaptée. Il est ainsi généré deux ondes différentes déphasées de π/2 l'une par rapport à l'autre, ce qui correspond à la fourniture de deux composantes orthogonales l'une étant une composante réelle (I) et l'autre étant une composante imaginaire (Q). Ces deux composantes sont sommées au niveau du coupleur de sortie. Le signal de sortie est modulé en amplitude avec un nombre d'états possibles du signal de 2 x N. La porteuse optique obtenue est modulée par un signal qui est appelé 2N-QAM. L'équipe de P. DONG et al. a démontré la faisabilité d'une telle modulation sur un modulateur Mach-Zehnder en silicium pour obtenir du 16 QAM (voir notamment l'article intitulé « 224-Gb/S PDM-16-QAM Modulator and Receiver based on Silicon Photonic Integrated Circuits », OFC NOFOEC 2013 papier PDP5C.6).

Pour générer de tels signaux 2N-QAM, des modulateurs Mach- Zehnder en niobate de lithium sont couramment utilisés. De tels modulateurs Mach- Zehnder sont disponibles commercialement et permettent l'obtention d'une modulation d'amplitude pure. Avec un tel dispositif, l'homme du métier connaît la relation entre le signal électrique de modulation et l'amplitude du champ optique qui est une relation linéaire dès lors que le Mach-Zehnder est alimenté par une tension continue adéquate. De ce fait, tout l'espace de modulation I et Q peut être atteint.

Toutefois, un tel système de modulation implique, pour chaque modulateur Mach-Zehnder, de convertir un premier signal codant un seul bit par symbole en un deuxième signal codant plusieurs bits par symbole. Pour mettre en oeuvre cette fonction, le système de modulation comporte, par exemple, un convertisseur numérique-analogique par modulateur Mach-Zehnder. En pratique, chaque convertisseur numérique-analogique présente des imperfections (notamment en terme de résolution) pouvant entraîner la dégradation des performances globales du système de modulation. De plus, les modulateurs Mach- Zehnder présentent le désavantage d'être grands en taille et de consommer beaucoup de puissance électrique par comparaison avec un modulateur en anneau résonant.

Pour pallier à ces inconvénients, il a été proposé d'autres montages à base de modulateurs en anneau résonant, qui présentent l'avantage par rapport au Mach-Zehnder d'être moins grands en taille et de consommer moins de puissance électrique. Comme le modulateur en anneau tout seul ne permet pas une modulation d'amplitude pure, il a été proposé par les mêmes auteurs que précédemment un montage avec deux anneaux au lieu des modulateurs Mach-Zehnder formant des modulateurs de type PSK (acronyme pour l'anglais « Phase-Shift Keying » pour modulation par changement de phase).

Mais, un tel dispositif est limité à une modulation à quatre états.

Dans un article d'Y. EHRLICHMAN et al. intitulé « Generating arbitrary optical signal constellations using microring resonators », du journal Optics Express, Volume 21, n°3, page 3791 à 3799 de février 2013 et dans un article de R INTEGLIA et al. intitulé « Parallel-coupled dual racetrack silicon resonators for quadrature amplitude modulation », de la revue Optics express, volume 19, n°16 pages 14 892 à 14902, daté de 2011, il est proposé d'utiliser deux modulateurs en anneau résonant en série, le premier assurant une modulation en intensité et le second assurant modulation de phases.

Toutefois, pour la modulation de phase, la taille d'anneau est de plusieurs centaines de microns ce qui induit une réduction de la vitesse de modulation qui devient inférieur au gigaHertz. En outre, il convient d'utiliser deux convertisseurs numérique-analogique pour obtenir une modulation 16 QAM. Un autre système de modulation de l'art antérieur est décrit dans US2014/0328601.

Il apparaît donc que tous les systèmes proposés jusqu'à présent sont complexes, que ce soit parce que ces systèmes imposent une loi de commande relativement difficile à générer ou par que ces systèmes sont encombrants.

RESUME DE L'INVENTION

Il existe donc un besoin pour un système de modulation permettant d'obtenir une modulation d'amplitude en quadrature multiniveaux qui soit de mise en oeuvre plus aisée.

Selon l'invention, ce but est atteint par un système de modulation propre à générer une modulation d'amplitude en quadrature multiniveaux susceptible d'être représentée par une constellation à $4^k$ états, k étant un entier positif supérieur ou égal à 2, le système de modulation comprenant un premier nombre de premières voies optiques, chacune des premières voies optiques comprenant un dispositif de modulation et un deuxième nombre de premières voies optiques comportant, en outre, chacune une première unité de déphasage, la première unité de déphasage étant propre à introduire un déphasage de $\pi$, un premier nombre de deuxièmes voies optiques, chacune des deuxièmes voies optiques étant associée de manière bijective avec une des premières voies optiques, chacune des deuxièmes voies optiques comprenant les mêmes éléments que la première voie optique à laquelle la deuxième voie optique est associée et une deuxième unité de déphasage, la deuxième unité de déphasage étant propre à introduire un déphasage de $\pi/2$. Le premier nombre est égal à l'entier k, et le deuxième nombre est égal au quotient de la division euclidienne de l'entier k par le nombre 2.

Suivant des modes de réalisation particuliers, le système comprend une ou plusieurs des caractéristiques suivantes, prise(s) isolément suivant toute combinaison techniquement possible :

- l'entier k est un nombre pair et dans lequel chaque dispositif de modulation comporte un modulateur d'amplitude uniquement.
- l'entier k est un nombre impair et dans lequel l'ensemble des dispositifs de modulation du système est repartie en deux sous-ensembles, chaque dispositif de modulation du premier sous-ensemble étant un modulateur d'amplitude uniquement et les dispositifs de modulation du deuxième ensemble faisant partie d'une unité de modulation par changement de phase binaire, le premier sous-ensemble comportant deux fois le deuxième nombre de dispositifs de modulation et le deuxième sous-ensemble comportant deux dispositifs de modulation.

- les dispositifs de modulation optique appartenant aux premières voies optiques sont ordonnées selon un ordre représentable par un indice variant entre 1 et deux fois le deuxième nombre, le i-ème dispositif de modulation optique fonctionnant entre une i-ème première valeur de modulation et une i-ème deuxième valeur de modulation, pour tout entier i variant entre 1 et deux fois le deuxième nombre, les i-ème premières valeurs de modulation $V_{1i}$ et i-ème deuxième valeur de modulation $V_{2i}$ étant définies par les formules suivantes :

$$V_{1i} = \frac{E}{2} + \frac{E}{2^i}$$

$$V_{2i} = \frac{E}{2} - \frac{E}{2^i}$$

où :

- E est le champ injecté en entrée du i-ème dispositif de modulation, et
- « . » désigne la fonction multiplication.

- les dispositifs de modulation optique appartenant aux deuxièmes voies optiques sont ordonnées selon un ordre représentable par un indice variant entre 1 et deux fois le deuxième nombre, le i-ème dispositif de modulation optique fonctionnant entre une i-ème première valeur de modulation et une i-ème deuxième valeur de modulation, pour tout entier i variant entre 1 et deux fois le deuxième nombre, les i-ème premières valeurs de modulation $V_{1i}$ et i-ème deuxième valeur de modulation $V_{2i}$ étant définies par les formules suivantes :

$$V_{1i} = \frac{E}{2} + \frac{E}{2^i}$$

$$V_{2i} = \frac{E}{2} - \frac{E}{2^i}$$

où :

- E est le champ injecté en entrée du i-ème dispositif de modulation, et
- « . » désigne la fonction multiplication.

- chaque dispositif de modulation optique comporte un modulateur de Mach-Zehnder ou un modulateur à électro-absorption.
- chaque dispositif de modulation optique comporte une unité de génération d'une modulation d'un signal optique, l'unité comprenant un premier modulateur en anneau résonant comportant un premier guide d'ondes présentant une entrée et une sortie, un premier guide d'ondes en anneaux, dit premier anneau, le premier anneau étant couplé optiquement au premier guide d'ondes et présentant un premier indice effectif, et un premier dispositif de commande propre à moduler le premier indice effectif du premier anneau selon une première loi de commande. L'unité comprend aussi un deuxième modulateur en anneau résonant comportant un deuxième guide d'ondes présentant une entrée, et une sortie, l'entrée du deuxième guide d'ondes étant reliée à la sortie du premier guide d'ondes, un deuxième guide d'ondes en anneau, dit deuxième anneau, le deuxième anneau étant couplé optiquement au deuxième guide d'ondes et présentant un deuxième indice effectif, et étant indépendant du premier anneau, et un deuxième dispositif de commande propre à moduler le deuxième indice effectif du deuxième anneau selon une deuxième loi de commande. L'unité de modulation présente au moins une caractéristique influençant le chirp introduit par l'unité de modulation, les caractéristiques de l'unité de modulation étant choisie de sorte à minimiser la valeur absolue du chirp introduit par l'unité de modulation.
- le dispositif de modulation comporte au moins deux unités de modulation propres à fonctionner à deux longueurs d'onde distinctes.
- l'entier k est égal à 2, 3 ou 4.
- le premier modulateur en anneau résonant présente une première fonction de transfert définie comme le rapport entre le champ optique en sortie du premier modulateur et le champ optique incident et présente des premiers paramètres influençant la première fonction de transfert, le deuxième modulateur en anneau résonant présente une deuxième fonction de transfert définie comme le rapport entre le champ optique en sortie du deuxième modulateur et le champ optique incident et présente des deuxièmes paramètres influençant la deuxième fonction de transfert, les caractéristiques influençant le chirp introduit par le dispositif étant les premiers paramètres et les deuxièmes paramètres.
- les deux modulateurs en anneau résonant sont identiques.
- la première loi de commande et la deuxième loi de commande sont telles que lorsque le premier indice effectif varie d'une première quantité, le deuxième indice effectif varie d'une deuxième quantité opposée à la première quantité.
- les première et deuxième lois de commandes commandent respectivement les premier et deuxième modulateurs en anneau par injection de porteurs, la première loi de commande étant une tension variant entre $V_{BIAS}$ et $V_{BIAS}$ - A, A étant une valeur positive et $V_{BIAS}$ étant une valeur strictement supérieure à A et la deuxième loi de commande étant une tension variant entre $V_{BIAS}$ et $V_{BIAS}$ +$\beta$*A, $\beta$ étant une valeur strictement positive.
- les première et deuxième lois de commandes commandent respectivement les premier et deuxième modulateurs en anneau par déplétion de porteurs, la première loi de commande étant une tension variant entre - $V_{BIAS}$ et - $V_{BIAS}$ +A, A étant une valeur positive et $V_{BIAS}$ étant une valeur strictement supérieure à A et la deuxième loi de commande étant une tension variant entre - $V_{BIAS}$ et - $V_{BIAS}$ - $\beta$*A, $\beta$ étant une valeur strictement positive.
- le dispositif comporte une entrée, une sortie et un guide d'ondes intermédiaire, le guide d'ondes intermédiaire reliant l'entrée du deuxième guide d'ondes à la sortie du premier guide d'ondes.
- le dispositif comporte une entrée, une sortie, le premier modulateur en anneau résonant comportant un troisième guide d'ondes présentant une entrée et une sortie, le troisième guide d'ondes étant couplé optiquement au premier anneau, l'entrée du dispositif étant l'entrée du troisième guide d'ondes.

L'invention concerne aussi une architecture comportant une source optique, un système de modulation tels que décrits précédemment, la source optique étant propre à illuminer le système de modulation.

**EP 3 065 315 B1**

BREVE DESCRIPTION DES FIGURES

D'autres caractéristiques et avantages de l'invention apparaîtront à la lecture de la description qui suit de modes de réalisation de l'invention, donnée à titre d'exemple uniquement et en référence aux dessins qui sont :

- figure 1, un diagramme de constellation d'une modulation de type 16-QAM ;
- figure 2, une représentation schématique d'un exemple d'architecture comprenant un système de modulation propre à générer une modulation d'amplitude en quadrature susceptible d'être représentée par une constellation à $4^k$ états pour un entier k supérieur ou égal à 2 ;
- figure 3, une représentation schématique de l'exemple de système de modulation selon la figure 2 ;
- figure 4, une représentation schématique d'un exemple d'ensemble de dispositifs de modulation appartenant au système de modulation de la figure 2 ;
- figure 5, une représentation schématique de l'exemple de système de modulation selon la figure 2 pour un entier k pair ;
- figure 6, une représentation schématique de l'exemple de système de modulation selon la figure 2 pour un entier k impair ;
- figure 7, une vue schématique d'une unité de modulation optique selon un premier exemple ;
- figure 8, un ordinogramme d'un exemple de procédé d'annulation du chirp de l'unité de la figure 7 ;
- figure 9, un graphe présentant l'évolution temporelle d'un exemple de lois de commande en tension appliquées à l'unité de la figure 7 ;
- figures 10 et 11, des graphes présentant l'évolution simulée de l'intensité et respectivement de la phase du champ optique en fonction de la variation de l'indice effectif en sortie de l'unité de la figure 7 et en sortie d'une unité avec un seul modulateur en anneau résonant ;
- figure 12, une vue schématique d'une unité de modulation selon un deuxième exemple ;
- figures 13 et 14, respectivement les mêmes figures que les figures 10 et 11 pour l'unité selon le deuxième exemple ;
- figure 15, une vue schématique d'un modulateur en anneau résonant ;
- figure 16, un graphe présentant l'évolution simulée du module de la fonction de transfert en sortie du port Drop en fonction de la longueur d'onde de la lumière en entrée du modulateur de la figure 15 en présence et en l'absence de modulation de l'indice effectif de l'anneau ;
- figure 17, un graphe montrant l'évolution du module de la fonction transfert ainsi que la phase de la fonction de transfert à la longueur d'onde de résonance en sortie du port Drop en fonction de l'indice sélectif pour le modulateur de la figure 15;
- figures 18 et 19, respectivement les mêmes figures que les figures 16 et 17 en sortie du port Through au lieu du port Drop ;
- figure 20, une vue schématique d'un exemple de système de calibration ;

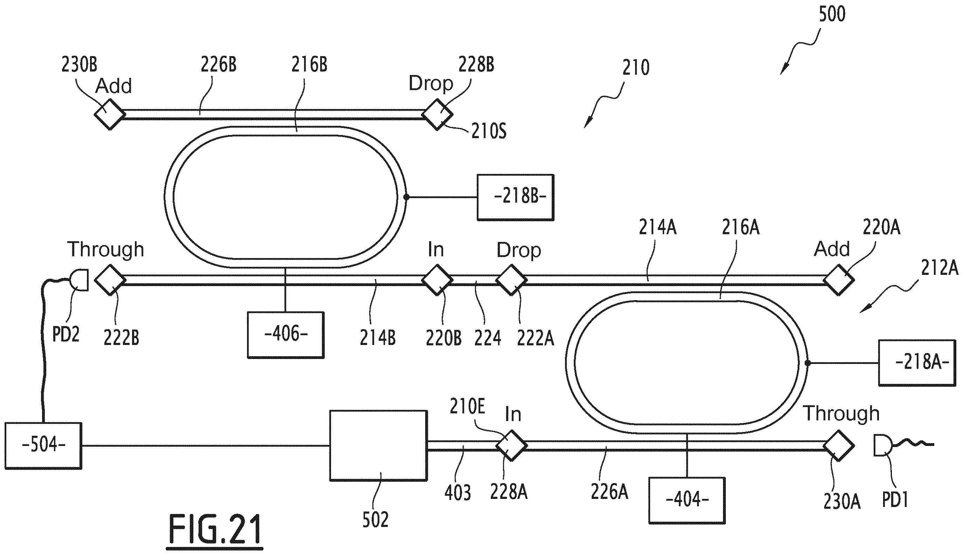

- figure 21, une vue schématique d'un exemple d'un système d'asservissement ;
- figure 22, un graphique illustrant l'intensité de deux signaux lumineux en fonction de la longueur d'onde de l'onde à moduler par l'unité de modulation ;
- figure 23, une représentation schématique d'un système de modulation propre à générer une modulation d'amplitude en quadrature susceptible d'être représentée par une constellation à $4^k$ états pour un entier k égal à 2 ;
- figure 24, une représentation schématique d'un système de modulation propre à générer une modulation d'amplitude en quadrature susceptible d'être représentée par une constellation à $4^k$ états pour un entier k égal à 3, et
- figure 25, une représentation schématique d'un système de modulation propre à générer une modulation d'amplitude en quadrature susceptible d'être représentée par une constellation à $4^k$ états pour un entier k égal à 4.

DESCRIPTION DETAILLEE DE MODES DE REALISATION DE L'INVENTION

Dans la suite, des définitions générales sont d'abord données. Un résumé de l'invention est ensuite donné avant de traiter d'un exemple de système de modulation pour un entier k supérieur ou égal à 2. Il est ensuite détaillé le cas d'un entier k pair puis le cas d'un entier k impair. Des exemples d'unités de modulation sont ensuite décrits avant d'expliciter certains cas particuliers (k=2, k=3 et k=4).

*1 - DEFINITIONS GENERALES*

La modulation d'amplitude en quadrature multiniveaux est largement utilisée dans le domaine des communications radio de données. De nombreuses formes de modulation d'amplitude en quadrature multiniveaux existent. Notamment, les modulations 16-QAM, 32-QAM, 64-QAM, 128-QAM et 256-QAM sont particulièrement intéressantes. Le chiffre précédant la modulation donne le nombre d'états possibles dans la modulation d'amplitude en quadrature multiniveaux considérée.

Un des grands avantages d'utiliser de telles modulations est d'augmenter le débit sans augmenter forcement la bande passante des composants, puisque plus le nombre d'états est important, plus il est possible de transporter de bits par symbole.

Un diagramme de constellation permet de montrer les différentes positions des états possibles dans une modulation de type QAM. Plus l'ordre de la modulation augmente, plus le nombre de points dans le diagramme de constellation augmente.

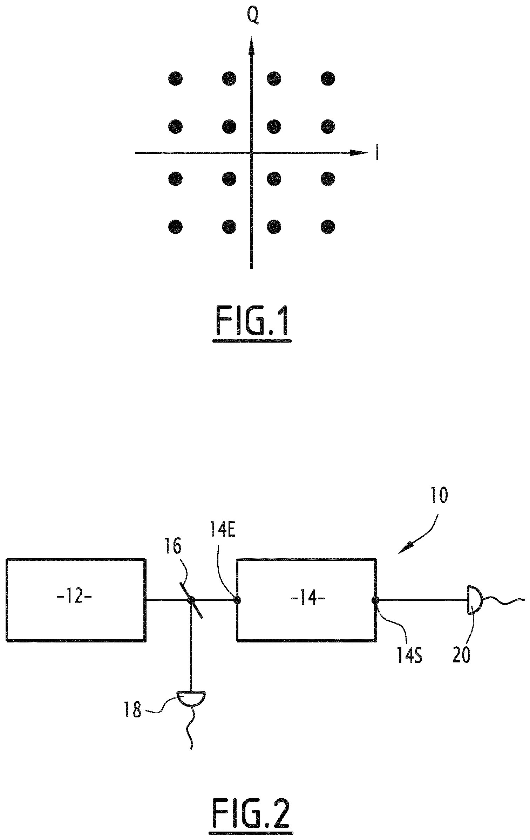

A titre d'exemple, la figure 1 présente la constellation d'un diagramme pour une modulation de type 16-QAM. Comme attendu, le graphique comporte seize points distincts. Il est à noter qu'il existe quatre coordonnées sur chacun des deux axes I et Q pour chacun des états. La moitié de ces coordonnées sont positives et l'autre moitié est négative. Plus généralement, pour toute constellation de type $4^k$-QAM, où k est un entier supérieur ou égal à 2, il peut être montré que tous les états ont une première coordonnée le long de l'axe I choisie parmi $2^k$ coordonnées et une deuxième coordonnée le long de l'axe Q choisie parmi $2^k$ coordonnées.

## 2 - RESUME DE L'INVENTION

L'invention propose un montage particulier permettant de générer des modulations QAM particulières, à savoir des modulations de type $4^k$-QAM, où k est un entier supérieur ou égal à 2.

De manière la plus générale, le montage particulier est un système de modulation propre à générer une modulation d'amplitude de type $4^k$-QAM, le système de modulation comprenant :

- un premier nombre de premières voies optiques, chacune des premières voies optiques comprenant un dispositif de modulation et un deuxième nombre de premières voies optiques comportant, en outre, chacune une première unité de déphasage, la première unité de déphasage étant propre à introduire un déphasage de $\pi$,
- un premier nombre de deuxièmes voies optiques, chacune des deuxièmes voies optiques étant associée de manière bijective avec une des premières voies optiques, chacune des deuxièmes voies optiques comprenant les mêmes éléments que la première voie optique à laquelle la deuxième voie optique est associée et une deuxième unité de déphasage, la deuxième unité de déphasage étant propre à introduire un déphasage de $\pi/2$,
- le premier nombre est égal à l'entier k, et
- le deuxième nombre est égal au quotient de la division euclidienne de l'entier k par le nombre 2.

Le système et son fonctionnement sont détaillés dans la suite de la description.

Le système permet de générer une modulation d'amplitude en quadrature multiniveaux.

Cette génération est de mise en oeuvre plus aisée notamment parce qu'il peut être démontré que le système n'implique pas l'emploi de convertisseurs numérique-analogique.

## 3 - EXEMPLE DE SYSTEME DE MODULATION POUR UN ENTIER k QUELCONQUE

Dans cette section, k est un entier quelconque ayant la propriété d'être supérieur ou égal à deux.

Une architecture 10 est montrée à la figure 2.

L'architecture 10 comporte une source optique 12 et un système de modulation 14.

La source optique 12 est, par exemple, une source laser.

La source optique 12 est propre à illuminer le système de modulation 14 pour injecter une onde optique dans le système de modulation 14.

Le système de modulation 14 comporte un port d'entrée 14E et un port de sortie 14S.

A titre d'exemple, chaque port 14E et 14S est un guide d'ondes.

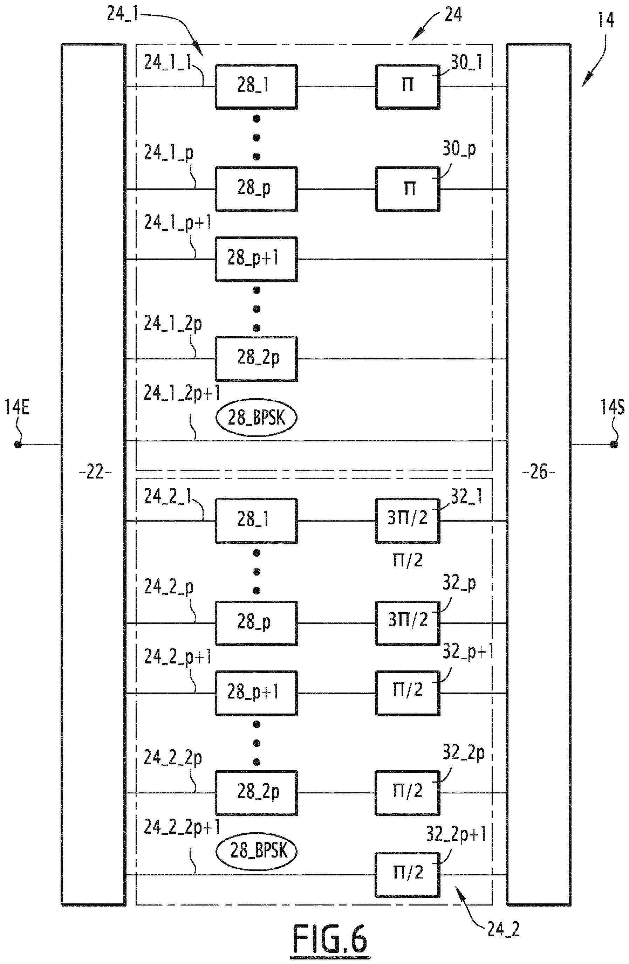

Selon l'exemple de la figure 6, la source optique 12 et le port d'entrée 14E du système de modulation 14 sont reliés par un guide d'ondes intermédiaire.

Le système de modulation 14 est propre à générer une modulation de type $4^k$-QAM comme définie précédemment. Plus précisément, le système de modulation 14 est propre à générer une modulation de type $4^k$-QAM sur une onde incidente sur le port d'entrée 14E. Le système de modulation 14 permet ainsi d'obtenir une onde modulée sur le port de sortie 14S.

Pour mettre en évidence une telle modulation, il est proposé sur la figure 2 un montage de caractérisation avec une lame séparatrice 16 et deux photodiodes 18 et 20. La lame séparatrice 16 est intercalée entre la source optique 12 et le port d'entrée 14E du système de modulation 14 et permet de prélever une partie de l'onde optique incidente injectée au port d'entrée 14E du système de modulation 14. La première photodiode 18 récolte l'onde optique incidente pour obtenir un signal. La deuxième photodiode 20 est positionnée de manière à récolter l'onde optique de sortie du système de modulation 14 pour obtenir un signal. La comparaison des signaux générés par les deux photodiodes 18 et 20 permet de mettre en évidence la génération d'une modulation de type $4^k$-QAM.

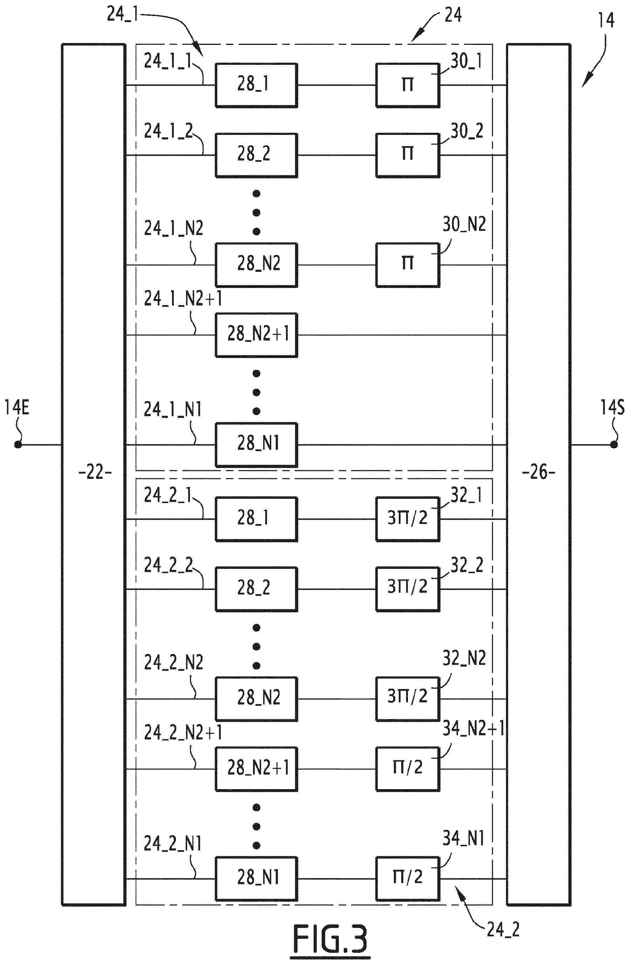

En référence à la figure 3, un exemple de système de modulation 14 est illustré.

Le système de modulation 14 comprend un étage d'entrée 22, un ensemble de voies optiques de modulation 24 et un étage de sortie 26.

L'étage d'entrée 22 est propre à récolter une onde optique incidente sur le port d'entrée 14E du système de modulation 14 et à diviser l'onde optique incidente en une pluralité d'ondes optiques incidentes pour chacune des voies optiques de modulation 24.

Par exemple, l'étage d'entrée 22 est une voie optique d'entrée et un diviseur de puissance optique.

Chacune des voies optiques de modulation 24 est propre à moduler une onde optique incidente respective pour obtenir une onde optique de sortie respective.

L'étage de sortie 26 est propre à recombiner les ondes optiques de sortie de chacune des voies optiques de modulation 24 pour obtenir une onde optique en sortie du système de modulation 14, c'est-à-dire une onde optique émergente au niveau du port de sortie 14S du système de modulation 14.

Par exemple, l'étage de sortie 26 est une voie optique d'entrée et un combineur de puissance optique.

Une voie optique est, dans le cadre de la figure 3, une voie de propagation sur laquelle une onde incidente interagit avec des éléments optiques.

Dans le cas de la figure 3, les différentes voies optiques de modulation 24 sont parallèles dans la mesure où chaque onde incidente dans une voie optique de modulation se propage ou interagit avec un élément optique correspondant en même temps que les autres ondes incidentes.

L'ensemble des voies optiques de modulation 24 est répartie en deux parties, à savoir les premières voies optiques de modulation 24_1 et les deuxièmes voies optiques de modulation 24_2.

L'ensemble des voies optiques de modulation 24 comporte autant de premières voies optiques de modulation 24_1 que de deuxièmes voies optiques de modulation 24_2. En l'occurrence, l'ensemble des voies optiques de modulation 24 comporte un premier nombre N1 de premières voies optiques de modulation 24_1 et un premier nombre N1 de deuxièmes voies optiques de modulation 24_2.

Il existe un lien entre le premier nombre N1 et la représentation de la modulation de type $4^k$-QAM sous forme de constellation. En effet, le premier nombre N1 est égal à l'entier k.

Par commodité, chacune des premières voies optiques de modulation 24_1 sont repérées par un indice numérique. Ainsi, la première voie optique de modulation qui est repérée par l'indice 1 est notée 24_1_1 dans la suite ; la première voie optique de modulation qui est repérée par l'indice 2 est notée 24_1_2 dans la suite et ainsi de suite jusqu'à la première voie optique de modulation repérée par l'indice N1 qui est notée 24_1_N1. Les indices seront également utilisés pour repérer tous les éléments appartenant à une première voie optique de modulation 24_1 donnée.

Dans le cas particulier représenté sur la figure 3, sans que ce soit une limitation, l'entier k est supposé strictement supérieur à 5. De ce fait, le premier nombre N1 est strictement supérieur à 5.

Chacune des premières voies optiques de modulation 24_1 comporte un dispositif de modulation 28.

Chaque dispositif de modulation 28 est repéré avec l'indice de la première voie optique de modulation 24_1 à laquelle le dispositif de modulation 28 appartient. Ainsi, le premier dispositif de modulation 28_1 appartient à la première voie optique de modulation 24_1_1 qui est repérée par l'indice 1 ; le deuxième dispositif de modulation 28_2 appartient à la première voie optique de modulation 24_1_2 qui est repérée par l'indice 2 et ainsi de suite jusqu'au N1$^{ème}$ dispositif de modulation 28_N1 qui appartient à la première voie optique de modulation 24_1_N1 repérée par l'indice N1.

La nature des dispositifs de modulation 28 est décrite plus précisément dans la suite.

Parmi les premières voies de modulation 24_1, un deuxième nombre de premières voies de modulation comportent, en outre, une unité de déphasage 30 propre à introduire un déphasage de $\pi$ dans la phase de l'onde incidente. Une telle unité de déphasage est notée simplement « unité 30 de déphasage de $\pi$ » dans la suite.

Le deuxième nombre est noté N2. Il existe un lien entre le deuxième nombre N2 et la représentation de la modulation de type $4^k$-QAM sous forme de constellations. En effet, le deuxième nombre N2 est égal au quotient de la division euclidienne de l'entier k par le nombre 2.

De manière alternative, le deuxième nombre N2 est égal à la partie entière de la division de l'entier k par le nombre 2. Cela s'écrit mathématiquement N2 = E(k/2) où E désigne la fonction mathématique partie entière.

Par définition, la partie entière d'un nombre réel x est l'unique entier relatif n (positif, négatif ou nul) tel que

$$n \leq x < n+1$$

Ainsi, à titre d'exemple, pour k = 4, N2 = 2 et pour k = 7, N2 = 3.

Pour simplifier, il est supposé que les premières voies optiques de modulation 24_1 qui sont repérées par un indice compris entre 1 et le deuxième nombre N2 comportent une unité 30 de déphasage de $\pi$. Ainsi, la première unité 30_1 de déphasage de $\pi$ appartient à la première voie optique de modulation 24_1_1 qui est repérée par l'indice 1 ; la deuxième unité de 30_2 de déphasage de π appartient à la première voie optique de modulation 24_1_2 qui est repérée par l'indice 2 et ainsi de suite jusqu'à la N2$^{ème}$ unité 30_N2 de déphasage de π qui appartient à la première voie optique de modulation 24_1_N2 repérée par l'indice N2.

Par définition, une unité de déphasage de π est une unité propre à introduire un déphasage de π dans la phase d'une onde incidente.

Plus généralement, une unité de déphasage de X (X étant un nombre) est une unité propre à introduire un déphasage de X dans la phase d'une onde incidente. Autrement formulé, le déphasage entre une onde émergente d'une telle unité de déphasage et une onde incidente est égal à X.

Comme attendu, par contre, toutes les premières voies optiques dont l'indice est compris entre l'entier N2+1 et l'entier N1 ne comportent pas d'unité de déphasage de π. Notamment, la première voie optique de modulation 24_1_N2+1 qui est repérée par l'indice N2+1 ne comporte pas d'unité de déphasage de π. Il en est de même pour la première voie optique de modulation 24_1_N1 qui est repérée par l'indice N1 ne comporte pas non plus d'unité de déphasage de π.

Par commodité, chacune des deuxièmes voies optiques de modulation 24_2 sont également repérées par un indice numérique. Ainsi, la deuxième voie optique de modulation qui est repérée par l'indice 1 est notée 24_2_1 dans la suite ; la deuxième voie optique de modulation qui est repérée par l'indice 2 est notée 24_2_2 dans la suite et ainsi de suite jusqu'à la deuxième voie optique de modulation repérée par l'indice N1 qui est notée 24_2_N1. Les indices seront également utilisés pour repérer tous les éléments appartenant à une deuxième voie optique de modulation 24_2 donnée.

Chacune des deuxièmes voies optiques de modulation 24_2 est associée de manière bijective avec une des premières voies optiques de modulation 24_1. Selon l'association bijective proposée, chacune des deuxièmes voies optiques de modulation 24_2 comprend les mêmes éléments que la première voie à laquelle la deuxième voie est associée et une unité de déphasage propre à introduire un déphasage de π/2.

En l'occurrence, une deuxième voie optique de modulation 24_2 est associée à une première voie optique de modulation 24_1 lorsque chacune des deux voies optiques de modulation 24_1 et 24_2 est repérée par le même indice. Autrement dit, cela signifie que la première voie optique de modulation 24_1_1 qui est repérée par l'indice 1 est associée de manière bijective à la deuxième voie optique de modulation 24_2_1 qui est repérée par l'indice 1 ; la première voie optique de modulation 24_1_2 qui est repérée par l'indice 2 est associée de manière bijective à la deuxième voie optique de modulation 24_2_2 qui est repérée par l'indice 2 ; ... ; la première voie optique de modulation 24_1_N2 qui est repérée par l'indice N2 est associée de manière bijective à la deuxième voie optique de modulation 24_2_N2 qui est repérée par l'indice N2 ; la première voie optique de modulation 24_1_N2+1 qui est repérée par l'indice N2+1 est associée de manière bijective à la deuxième voie optique de modulation 24_2_N2+1 qui est repérée par l'indice N2+1 ; ... ; la première voie optique de modulation 24_1_N1 qui est repérée par l'indice N1 est associée de manière bijective à la deuxième voie optique de modulation 24_2_N1 qui est repérée par l'indice N1.

Formulé de manière différente, l'existence de l'association bijective implique que chacune des deuxièmes voies optiques de modulation 24_2 comporte un dispositif de modulation 28. Chaque dispositif de modulation 28 est repéré avec l'indice de la deuxième voie optique de modulation 24_2 à laquelle le dispositif de modulation 28 appartient. Comme le dispositif de modulation 28 est identique pour chacune des première voies optiques et deuxième voies optiques 24_1 et 24_2 partageant le même indice, il n'a pas été fait de distinction entre le dispositif de modulation de la première voie optique et le dispositif de modulation de la deuxième voie optique dans le choix de la notation.

Ainsi, le premier dispositif de modulation 28_1 appartient à la deuxième voie optique de modulation 24_2_1 qui est repérée par l'indice 1 ; le deuxième dispositif de modulation 28_2 appartient à la première voie optique de modulation 24_2_2 qui est repérée par l'indice 2 et ainsi de suite jusqu'au N1$^{ème}$ dispositif de modulation 28_N1 qui appartient à la première voie optique de modulation 24_1_N1 repérée par l'indice N1.

La nature des dispositifs de modulation 28 est décrite plus précisément dans la suite.

En outre, un deuxième nombre de deuxièmes voies de modulation comportent, en outre, une unité de déphasage 32 propre à introduire un déphasage de 3π/2 dans la phase de l'onde incidente. Une telle unité de déphasage est notée simplement « unité 32 de déphasage de 3π/2 » dans la suite.

Ainsi, la première unité 32_1 de déphasage de 3π/2 appartient à la deuxième voie optique de modulation 24_2_1 qui est repérée par l'indice 1 ; la deuxième unité de 32_2 de déphasage de 3π/2 appartient à la deuxième voie optique de modulation 24_2_2 qui est repérée par l'indice 2 et ainsi de suite jusqu'à la N2$^{ème}$ unité 32_N2 de déphasage de 3π/2 qui appartient à la deuxième voie optique de modulation 24_2_N2 repérée par l'indice N2.

De plus, chacune des autres deuxièmes voies de modulations (celles qui sont repérées par un indice compris entre N2+1 et N1) comporte, en outre, une unité de déphasage 34 propre à introduire un déphasage de π/2 dans la phase de l'onde incidente. Une telle unité de déphasage est notée simplement « unité 34 de déphasage de π/2 » dans la suite.

Ainsi, l'unité 34_N2+1 de déphasage de π/2 qui est repérée par l'indice N2+1 appartient à la deuxième voie optique de modulation 24_2_N2+1 qui est repérée par l'indice N2+1 et ainsi de suite jusqu'à la N1$^{ème}$ unité 34_N1 de

déphasage de $\pi/2$ qui appartient à la deuxième voie optique de modulation 24_2_N1 repérée par l'indice N1.

Le fonctionnement du système 14 dépend de la parité de l'entier k. Il sera décrit plus précisément dans ce qui suit.

Il peut être démontré que le système 14 selon la figure 3 permet de générer une modulation M- QAM où M est égal à $4^k$.

En outre, le système 14 permet d'obtenir un tel effet sans utiliser de convertisseurs numérique-analogique.

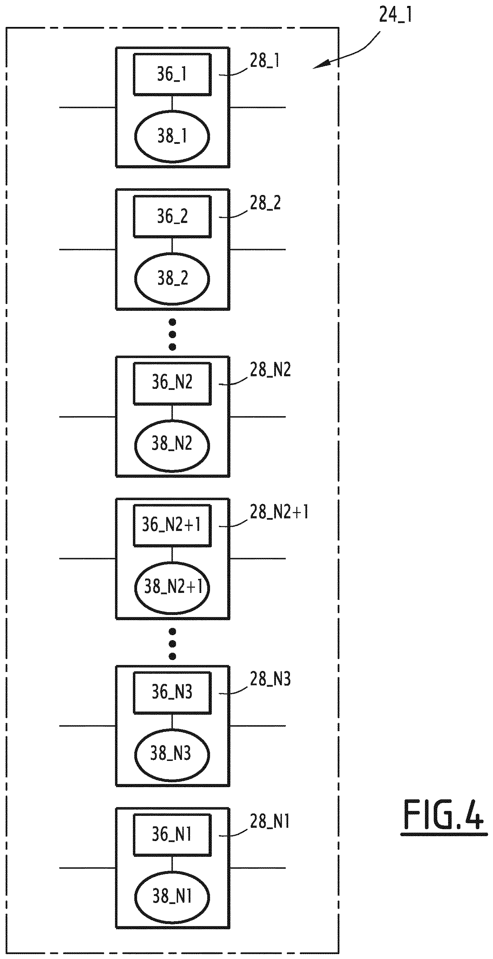

Selon un mode de réalisation, chaque dispositif de modulation 28 est tel que représenté schématiquement en référence à la figure 4.

Pour simplifier, seuls les dispositifs de modulation 28 des premières voies optiques 24_1 sont représentés sur la figure 4, sachant que les mêmes remarques s'appliquent pour les dispositifs de modulation 28 des deuxièmes voies optiques 24_2.

Chaque dispositif de modulation 28 comporte une unité de modulation 36 et une unité de contrôle 38 pour contrôler l'unité de modulation 36.

Comme précédemment, chaque unité de modulation 36 et chaque unité de contrôle 38 sont repérées par l'indice de la première voie optiques 24_1 à laquelle ces unités 36 et 38 sont associées. Ainsi, le premier dispositif de modulation 28_1 comporte une première unité de modulation 36_1 et une première unité de contrôle 38_1 ; le deuxième dispositif de modulation 28_2 comporte une deuxième unité de modulation 36_2 et une deuxième unité de contrôle 38_2 ; ... ; le N2$^{ème}$ dispositif de modulation 28_N2 comporte une N2$^{ème}$ unité de modulation 36_N2 et une N2$^{ème}$ unité de contrôle 38_N2 ; le N2+1$^{ème}$ dispositif de modulation 28_1 comporte une N2+1$^{ème}$ unité de modulation 36_N2+1 et une N2+1$^{ème}$ unité de contrôle 38_N2+1 ; ... ; le N1$^{ème}$ dispositif de modulation 28_N1 comporte une N1-ème unité de modulation 36_N1 et une N1$^{ème}$ unité de contrôle 38_N1.

Il est considéré une i$^{ème}$ unité de contrôle 38_i, i étant un entier compris entre 1 et un troisième nombre N3. Le troisième nombre N3 est le double du deuxième nombre N2.

Il est à noter, pour la suite, qu'il existe un lien entre le troisième nombre N3 et la représentation de la modulation de type $4^k$-QAM sous forme de constellations. En effet, le troisième nombre N3 est égal au produit de 2 par le quotient de la division euclidienne de l'entier k par le nombre 2.

La i$^{ème}$ unité de contrôle 38_i est propre à contrôler la i$^{ème}$ unité de modulation 36_i pour que la i$^{ème}$ unité de modulation 36_i fonctionne entre une i$^{ème}$ première valeur de modulation $V_{i1}$ et une i$^{ème}$ deuxième valeur de modulation $V_{i2}$. Pour la suite de la description, la i$^{ème}$ première valeur de modulation $V_{i1}$ est appelée i$^{ème}$ valeur une $V_{i1}$ tandis que la i$^{ème}$ deuxième valeur de modulation $V_{i2}$ est appelée i$^{ème}$ valeur deux $V_{i2}$.

La i$^{ème}$ valeur une $V_{i1}$ et la i$^{ème}$ valeur deux $V_{i2}$ sont définies par les formules suivantes pour i variant entre 1 et le deuxième nombre $N_2$ :

$$V_{i1} = \frac{E}{2} + \frac{E}{2^i}$$

$$V_{i2} = \frac{E}{2} - \frac{E}{2^i}$$

Où :

- E est le champ injecté en entrée de la i$^{ème}$ unité de modulation 38_i, et
- « . » désigne l'opération mathématique de multiplication.

A titre d'illustration, ces formules peuvent être explicitées pour les dispositifs de modulations 28 qui ont été représentés.

Ainsi, pour le premier dispositif de modulation 28_1, la première unité de modulation 36_1 est propre à fonctionner entre la première valeur une $V_{11}$ et la première valeur deux $V_{12}$, ces deux valeurs étant égales à :

$$V_{11} = \frac{E}{2} + \frac{E}{2^1} = \frac{E}{2} + \frac{E}{2} = E$$

$$V_{12} = \frac{E}{2} - \frac{E}{2^1} = \frac{E}{2} - \frac{E}{2} = 0$$

Pour le deuxième dispositif de modulation 28_2, la deuxième unité de modulation 36_2 est propre à fonctionner entre la deuxième valeur une $V_{21}$ et la deuxième valeur deux $V_{22}$, ces deux valeurs étant égales à :

$$V_{21} = \frac{E}{2} + \frac{E}{2^2} = \frac{E}{2} + \frac{E}{4} = \frac{3E}{4}$$

$$V_{22} = \frac{E}{2} - \frac{E}{2^2} = \frac{E}{2} - \frac{E}{4} = \frac{E}{4}$$

Pour le N2ème dispositif de modulation 28_N2, la N2ème unité de modulation 36_N2 est propre à fonctionner entre la N2ème valeur une $V_{N21}$ et la N2-ième valeur deux $V_{N22}$, ces deux valeurs étant égales à :

$$V_{N21} = \frac{E}{2} + \frac{E}{2^{N2}}$$

$$V_{N22} = \frac{E}{2} - \frac{E}{2^{N2}}$$

Un tel système 14 permet de simplifier encore plus la génération de la modulation souhaitée puisque les lois de commande de chaque unité de modulation 38 sont simples à mettre en oeuvre.

*4 - CAS D'UN ENTIER k PAIR*

Dans cette section, k est un entier pair quelconque ayant la propriété d'être supérieur ou égal à deux. De ce fait, l'entier k s'écrit sous la forme k = 2*p où p est un entier supérieur ou égal à un.

Il est à noter que, dans le cas où k est un entier pair, tous les dispositifs de modulation 28 sont, de préférence, des modulateurs en amplitude uniquement. Des exemples de modulateurs en amplitude sont détaillés en référence à la section 6.

Dans la suite, trois approches alternatives pour présenter le système de modulation 14 pour un entier k pair sont proposées. Les trois approches permettent de mieux appréhender le fonctionnement du système de modulation 14 dans ce cas particulier.

*4.1 - PREMIERE APPROCHE*

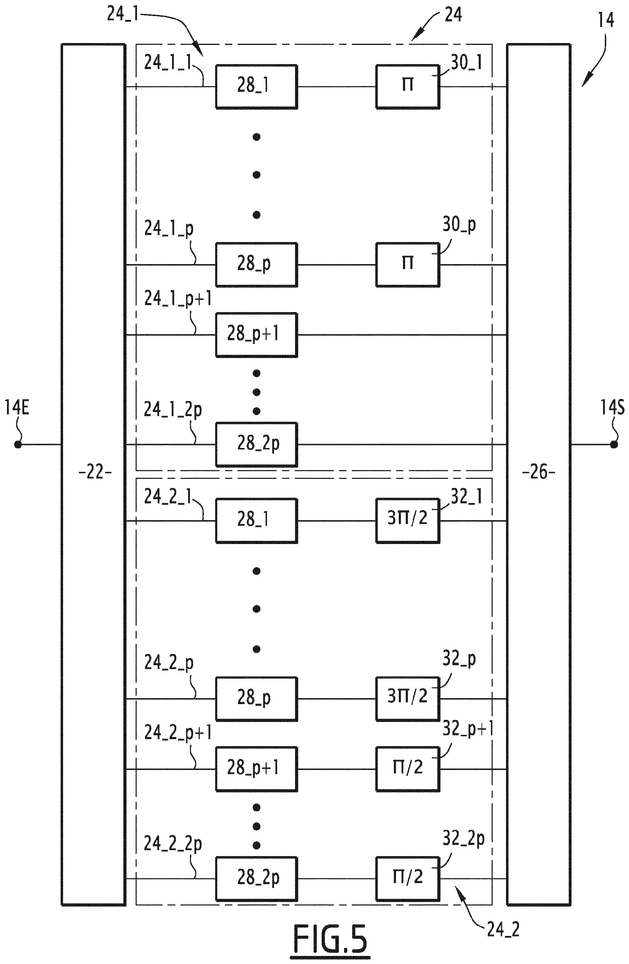

Selon la première approche, il est utilisée la présentation du paragraphe précédent relatif à l'entier k quelconque en référence à la figure 5.

Les mêmes remarques que pour le cas de l'entier k quelconque s'applique en remplaçant le premier entier N1 et le deuxième entier N2 par leur valeur respective. En l'occurrence, le premier entier N1 est égal à 2*p alors que le deuxième entier N2 est égal à p.

Le fonctionnement du système de modulation 14 est maintenant décrit.

Les mêmes remarques que pour le cas de l'entier k quelconque s'appliquent.

En outre, le troisième entier N3 est dans ce cas particulier égal à 2*p, c'est-à-dire égal au premier entier N1.

Cela signifie que, dans ce cas particulier, toutes les ième unités de contrôle 38_i sont propres à contrôler la ième unité de modulation 38_i pour que la ième unité de modulation 36_i fonctionne entre la ième valeur une $V_{i1}$ et la ième valeur deux $V_{i2}$.

De plus, il est à noter que pour le N2ème dispositif de modulation 28_N2, la N2ème unité de modulation 36_N2 est propre à fonctionner entre la N2ème valeur une $V_{N21}$ et la N2ème valeur deux $V_{N22}$, ces deux valeurs étant égales à :

$$V_{N21} = \frac{E}{2} + \frac{E}{2^p}$$

$$V_{N22} = \frac{E}{2} - \frac{E}{2^p}$$

En outre, il est également remarquable que, pour le N1$^{ème}$ dispositif de modulation 28_N1, la N1$^{ème}$ unité de modulation 36_N1 est propre à fonctionner entre la N1$^{ème}$ valeur une $V_{N11}$ et la N1$^{ème}$ valeur deux $V_{N12}$, ces deux valeurs étant égales à :

$$V_{N11} = \frac{E}{2} + \frac{E}{2^{2p}} = \frac{E}{2} + \frac{E}{2^{2p}}$$

$$V_{N12} = \frac{E}{2} - \frac{E}{2^{2p}} = \frac{E}{2} - \frac{E}{2^{2p}}$$

Par addition et soustraction, pour chacune des premières voies optiques 24_1, il peut être généré $2^p$ valeurs distinctes. Par symétrie, pour chacune des deuxièmes voies optiques 24_2, il peut être généré $2^p$ valeurs distinctes.

De plus, chacune des premières voies optiques 24_1 est déphasée de $\pi/2$ par rapport à la deuxième voie optique 24_2 associée par la bijection. Si les premières voies optiques 24_1 servent pour générer la composante réelle I, les deuxièmes voies optiques 24_2 servent pour générer la composante imaginaire Q.

Il est, ainsi, générée une modulation dont la constellation comporte $2^p \ast 2^p = 4^{2 \ast p} = 4^k$ états, c'est-à-dire une modulation de type $4^k$-QAM.

Un tel système de modulation 14 présente donc les mêmes avantages que précédemment.

### 4.2 - DEUXIEME APPROCHE

Selon la deuxième approche, il est remarqué, comme visible sur la figure 5, qu'au lieu de répartir l'ensemble des voies optiques de modulations en deux sous-ensembles comme pour la première approche, il est possible de répartir l'ensemble des voies optiques de modulation en quatre sous-ensembles : un premier sous-ensemble, un deuxième sous-ensemble, un troisième sous-ensemble et un quatrième sous-ensemble.

Chaque sous-ensemble comporte p voies optiques de modulation.

Chacune des voies optiques du premier sous-ensemble comporte un dispositif de modulation et une unité de déphasage de $\pi/2$. Chacune des voies optiques du deuxième sous-ensemble comporte un dispositif de modulation et une unité de déphasage de $\pi$. Chacune des voies optiques du troisième sous-ensemble comporte un dispositif de modulation et une unité de déphasage de $3\pi/2$. Chacune des voies optiques du quatrième sous-ensemble comporte un dispositif de modulation.

De manière alternative, les états des différents sous-ensembles peuvent aussi être décrits comme suit.

Chacune des voies optiques de modulation de l'ensemble comporte un dispositif de modulation. Chacune des voies optiques du premier sous-ensemble comportent, en outre, chacun, une unité de déphasage de $\pi/2$. Chacune des voies optiques du deuxième sous-ensemble comportent, en outre, chacun, une unité de déphasage de $\pi$. Chacune des voies optiques du troisième sous-ensemble comportent, en outre, chacun, une unité de déphasage de $3\pi/2$.

Le fonctionnement et les avantages sont les mêmes que précédemment.

### 4.3 - TROISIEME APPROCHE

Selon la troisième approche, il est remarqué, comme visible sur la figure 5, qu'au lieu de répartir l'ensemble des voies optiques de modulations en deux sous-ensembles comme pour la première approche, il est possible de répartir l'ensemble des voies optiques de modulation en p sous-ensembles.

Chaque sous-ensemble comporte quatre voies optiques de modulation. La première voie optique de modulation comprend un dispositif de modulation. La deuxième voie optique de modulation comprend un dispositif de modulation et une unité de déphasage de $\pi/2$. La troisième voie optique de modulation comprend un dispositif de modulation et une unité de déphasage de $\pi$. La quatrième voie optique de modulation comprend un dispositif de modulation et une unité de déphasage de $3\pi/2$.

Le fonctionnement et les avantages sont les mêmes que précédemment.

*5 - CAS D'UN ENTIER k IMPAIR*

Dans cette section, k est un entier impair quelconque ayant la propriété d'être supérieur ou égal à deux. De ce fait, l'entier k s'écrit sous la forme k = 2*p+1 où p est un entier supérieur ou égal à un.

Dans ce cas, tous les dispositifs de modulation 28 ayant un indice compris entre 1 et 2*p sont, de préférence, des modulateurs en amplitude uniquement et le dispositif de modulation 28_BPSK est un anneau de type BPSK (de l'anglais « Binary Phase-Shift Keying »). Des exemples de modulateurs en amplitude sont détaillés en référence à la section 6.

Dans la suite, trois approches alternatives pour présenter le système de modulation 14 pour un entier k impair sont proposées. Les trois approches permettent de mieux appréhender le fonctionnement du système de modulation 14 dans ce cas particulier.

## 5.1 - PREMIERE APPROCHE

Selon la première approche, il est utilisée la présentation du paragraphe précédent relatif à l'entier k quelconque en référence à la figure 6.

Les mêmes remarques que pour le cas de l'entier k quelconque s'applique en remplaçant le premier entier N1 et le deuxième entier N2 par leur valeur respective. En l'occurrence, le premier entier N1 est égal à 2*r+1 alors que le deuxième entier N2 est égal à r.

Le fonctionnement du système de modulation 14 est maintenant décrit.

Les mêmes remarques que pour le cas de l'entier k quelconque s'appliquent.

En outre, le troisième entier N3 est dans ce cas particulier égal à 2*r.

Cela signifie que, dans ce cas particulier, tous les i$^{\text{ème}}$ unités de contrôle 38_i sont propres à contrôler la i$^{\text{ème}}$ unité de modulation 38_i pour que la i$^{\text{ème}}$ unité de modulation 36_i fonctionne entre la i$^{\text{ème}}$ valeur une $V_{i1}$ et la i$^{\text{ème}}$ valeur deux $V_{i2}$.

De plus, il est à noter que pour le N2$^{\text{ème}}$ dispositif de modulation 28_N2, la N2$^{\text{ème}}$ unité de modulation 36_N2 est propre à fonctionner entre la N2$^{\text{ème}}$ valeur une $V_{N21}$ et la N2$^{\text{ème}}$ valeur deux $V_{N22}$, ces deux valeurs étant égales à :

$$V_{N21} = \frac{E}{2} + \frac{E}{2^p}$$

$$V_{N22} = \frac{E}{2} - \frac{E}{2^p}$$

En outre, il est également remarquable que, pour le N1-1$^{\text{ème}}$ dispositif de modulation 28_N1-1, la N1-1$^{\text{ème}}$ unité de modulation 36_N1-1 est propre à fonctionner entre la N1-1$^{\text{ème}}$ valeur une $V_{N11}$ et la N1-1$^{\text{ème}}$ valeur deux $V_{N12}$, ces deux valeurs étant égales à :

$$V_{N1-11} = \frac{E}{2} + \frac{E}{2^{2p}} = \frac{E}{2} + \frac{E}{2^{2p}}$$

$$V_{N1-12} = \frac{E}{2} - \frac{E}{2^{2p}} = \frac{E}{2} - \frac{E}{2^{2p}}$$

Par addition et soustraction, pour chacune des premières voies optiques 24_1, il peut être généré $2^p$ valeurs distinctes. Par symétrie, pour chacune des deuxièmes voies optiques 24_2, il peut être généré $2^p$ valeurs distinctes.

En outre, la combinaison du N1$^{\text{ème}}$ dispositif de modulation 28_BPSK de la première voie optique 24_1_N1 à laquelle l'indice est N1 et du N1$^{\text{ème}}$ dispositif de modulation 28_BPSK de la deuxième voie optique 24_1_N1 à laquelle l'indice est N1 avec la N1$^{\text{ème}}$ unité de déphasage de $\pi$/2 forme une unité de modulation par changement de phase binaire (aussi appelée BPSK). Cela permet de générer quatre valeurs différentes qui sont E, -E, j.E et j.E où j désigne pour toute la suite de la description le nombre complexe.

De plus, chacune des premières voies optiques 24_1 est unité de modulation par changement de phase binaire déphasée de $\pi$/2 par rapport à la deuxième voie optique 24_2 associée par la bijection. Si les premières voies optiques 24_1 servent pour générer la composante réelle I, les deuxièmes voies optiques 24_2 servent pour générer la composante imaginaire Q.

Il est, ainsi, générée une modulation dont la constellation comporte $2^p*2^p*4 = 4^{2*p+1} = 4^k$ états, c'est-à-dire une modulation de type $4^k$-QAM.

Un tel système de modulation 14 présente les mêmes avantages que précédemment.

## 5.2 - DEUXIEME APPROCHE

Selon la deuxième approche, il est remarqué, comme visible sur la figure 6, qu'au lieu de répartir l'ensemble des voies optiques de modulations en deux sous-ensembles comme pour la première approche, il est possible de répartir l'ensemble des voies optiques de modulation en quatre sous-ensembles : un premier sous-ensemble, un deuxième sous-ensemble, un troisième sous-ensemble et un quatrième sous-ensemble.

Chacune des voies optiques du premier sous-ensemble comporte un dispositif de modulation et une unité de déphasage de $\pi/2$. Chacune des voies optiques du deuxième sous-ensemble comporte un dispositif de modulation et une unité de déphasage de $\pi$. Chacune des voies optiques du troisième sous-ensemble comporte un dispositif de modulation et une unité de déphasage de $3\pi/2$. Chacune des voies optiques du quatrième sous-ensemble comporte un dispositif de modulation.

Les premier sous-ensemble et le quatrième sous-ensemble comporte p+1 voies optiques de modulation tandis que les deuxième sous-ensemble et troisième sous-ensembles comprend p voies optiques de modulation.

De manière alternative, les éléments des différents sous-ensembles peuvent aussi être décrits comme suit.

Chacune des voies optiques de modulation de l'ensemble comporte un dispositif de modulation. Chacune des voies optiques du premier sous-ensemble comportent, en outre, chacun, une unité de déphasage de $\pi/2$. Chacune des voies optiques du deuxième sous-ensemble comportent, en outre, chacun, une unité de déphasage de $\pi$. Chacune des voies optiques du troisième sous-ensemble comportent, en outre, chacun, une unité de déphasage de $3\pi/2$.

Le fonctionnement et les avantages sont les mêmes que précédemment.

## 5.3 - TROISIEME APPROCHE

Selon la troisième approche, il est remarqué, comme visible sur la figure 6, qu'au lieu de répartir l'ensemble des voies optiques de modulations en deux sous-ensembles comme pour la première approche, il est possible de répartir l'ensemble des voies optiques de modulation en p sous-ensembles et une unité de modulation par changement de phase binaire

Chaque sous-ensemble comporte quatre voies optiques de modulation. La première voie optique de modulation comprend un dispositif de modulation. La deuxième voie optique de modulation comprend un dispositif de modulation et une unité de déphasage de $\pi/2$. La troisième voie optique de modulation comprend un dispositif de modulation et une unité de déphasage de $\pi$. La quatrième voie optique de modulation comprend un dispositif de modulation et une unité de déphasage de $3\pi/2$.

Le fonctionnement et les avantages sont les mêmes que précédemment.

## 6 - NATURE DE DISPOSITIF DE MODULATION

Différents types d'unité de modulation utilisables dans le cadre de l'invention sont développés dans la suite.

## 6.1 - GENERALITES SUR UNE UNITE DE MODULATION EN AMPLITUDE PURE

Il est entendu, dans le cadre de l'invention, qu'une unité de modulation est une unité de modulation en amplitude pure ou en amplitude uniquement si l'unité de modulation est propre à moduler uniquement l'amplitude. Cela signifie que l'unité de modulation ne module pas, ou du moins très peu, la phase. Cette dernière propriété est quantifiable par le chirp défini ultérieurement.

A titre d'exemple, il peut être utilisé tout moyen connu comme un modulateur à électro-absorption (EAM), un modulateur Mach-Zehnder ou encore un modulateur en anneau bien choisi.

## 6.2 - UN EXEMPLE PARTICULIER D'UNITE DE MODULATION EN AMPLITUDE PURE

Un exemple particulier est d'abord décrit puis une annexe sur les modulateurs en anneau résonant est détaillée.

## 6.2.1 - DESCRIPTION DE L'EXEMPLE PARTICULIER

Selon l'invention, il est proposé d'utiliser un agencement de modulateur en anneau résonants présentant un chirp nul.

Lorsqu'un dispositif de modulation est utilisé pour effectuer une modulation en intensité d'un signal optique d'entrée, le signal optique de sortie obtenu est généralement également modulé en phase, ce qui n'est pas désiré. Par définition, le paramètre de chirp noté $\alpha$ traduit l'existence de cette modulation de phase non voulue sur le signal de sortie. Une définition mathématique possible du paramètre de chirp $\alpha$ est la suivante :

$$\alpha = 2I(t).\frac{\frac{d\phi(t)}{dt}}{\frac{dI(t)}{dt}}$$

où

- $I(t)$ est l'intensité instantanée du champ optique mesurée à une sortie du dispositif de modulation considéré, et
- $\Phi(t)$ est la phase instantanée du champ optique mesurée à une sortie du dispositif de modulation considéré.

Dans le document de M. SEIMETZ dont le titre est « High-Order Modulation for Optical Fiber Transmission » qui est paru chez Springer 2009, il est montré comment générer des signaux optiques suivant une modulation complexe. Une telle modulation est dite « modulation I - Q ». La génération de signaux optiques suivant une modulation complexe implique l'emploi de plusieurs dispositifs de modulation présentant un paramètre de chirp $\alpha$ nul.

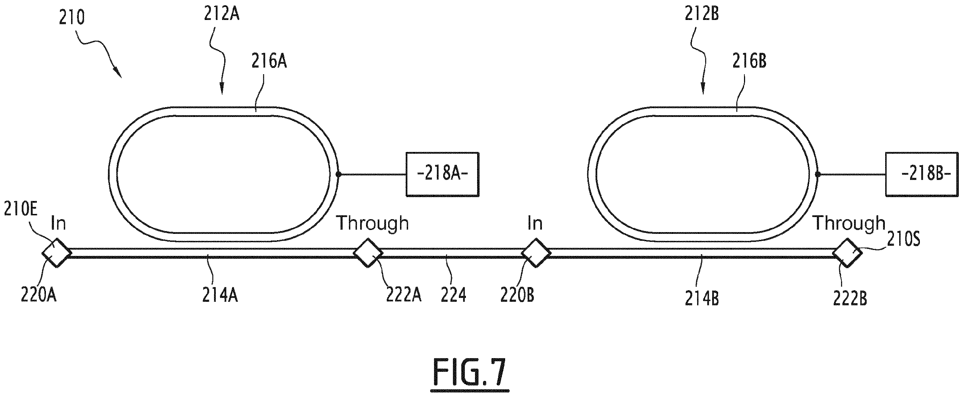

Une unité de génération d'une modulation 210 d'un signal optique est présentée à la figure 7. Dans la suite, l'unité de génération d'une modulation 210 est simplement notée unité de modulation 210.

L'unité de modulation 210 comporte une entrée 210E et une sortie 210S. Il est souhaité que l'unité de modulation 210 présente une valeur absolue minimale du chirp introduit par l'unité de modulation 210 pour un signal optique incident.

De manière générale, par l'expression « entrée », il est entendu dans la description un port par lequel pénètre un flux lumineux dans l'élément considéré. De manière correspondante, par l'expression « sortie », il est entendu dans la description un port par lequel sort un flux lumineux de l'élément considéré.

Appliqué au cas de l'entrée 210E et de la sortie 210S de l'unité de modulation 210, cela signifie que l'entrée 210E de l'unité de modulation 10 est un port par lequel pénètre un flux lumineux dans l'unité de modulation 210 et que la sortie 210S de l'unité de modulation 210 est un port par lequel sort le flux lumineux modulé par l'unité de modulation 210. En effet, l'unité de modulation 210 est propre à générer une modulation du signal optique introduit à l'entrée 210E de l'unité de modulation 210.

Autrement formulé, l'unité de modulation 210 fait donc partie d'un dispositif de modulation. Le dispositif de modulation comporte une source lumineuse et l'unité de modulation 210, la source lumineuse étant reliée à l'entrée 210E de la source de modulation 210 de manière à injecter un fonctionnement en flux lumineux dans l'unité de modulation 210.

A titre d'exemple, la source lumineuse est une source laser et un guide d'ondes relie la sortie de la source lumineuse à l'entrée 210E de l'unité de modulation 210.

Pour obtenir un chirp nul, il est proposé un arrangement de deux anneaux en configuration push-pull pour éliminer le chirp. Le chirp est éliminé puisque le signal électrique est complémentaire entre les deux anneaux, donc le chirp qui est introduit au premier anneau est compensé au deuxième anneau. Ce principe est décrit précisément dans la description qui suit.

L'unité de modulation 210 comporte un premier modulateur 212A en anneau résonant et un deuxième modulateur 212B en anneau résonant.

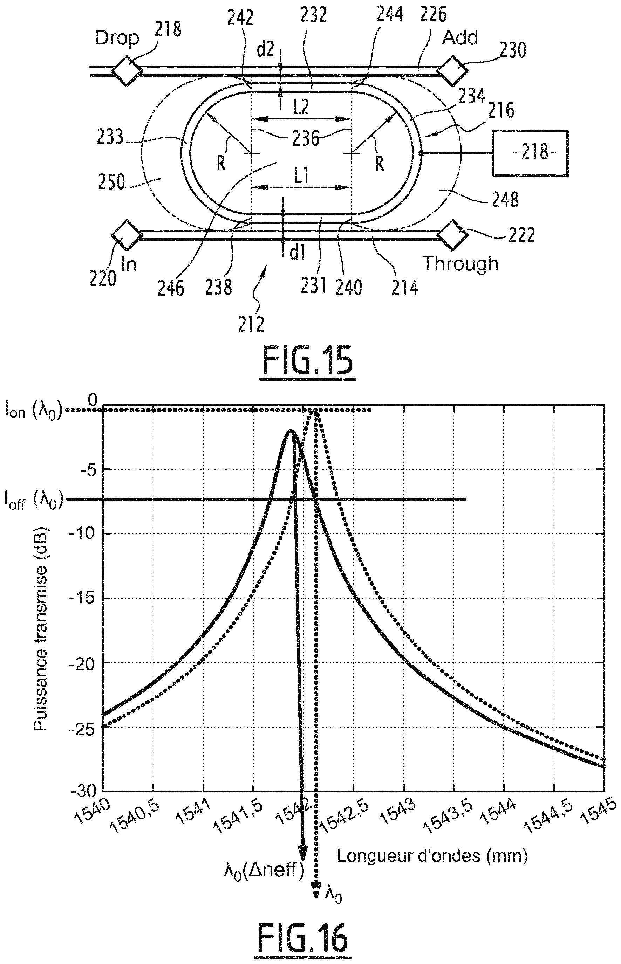

Les éléments d'un modulateur en anneau résonant sont décrits en détail dans l'annexe décrivant les figures 15 à 19. Seule une partie de ces éléments sont repris ici, les définitions de ces éléments étant supposées connues grâce à l'annexe.

Le premier modulateur 212A comporte un premier guide d'ondes 214A, un premier guide d'ondes en anneau 216A, dit premier anneau 216A, et un premier dispositif de commande 218A.

Le premier guide d'ondes 214A présente une entrée 220A et une sortie 222A.

La forme du premier guide d'ondes 214A est quelconque.

Dans le cas de la figure 7, à titre d'exemple, l'entrée 220A du premier guide d'ondes 214A est le port In et la sortie de 222A du premier guide d'ondes 214A est le port Through.

Le premier anneau 216A est couplé optiquement au premier guide d'ondes 214A.

Le premier anneau 216A présente un premier indice effectif Neff1.

Le premier dispositif de commande 218A est propre à moduler le premier indice effectif Neff1 du premier anneau 216A selon une première loi de commande L1.

De manière similaire, le deuxième modulateur 212B comporte un deuxième guide d'ondes 214B, un deuxième guide d'ondes en anneau 216B, dit deuxième anneau 216B, et un deuxième dispositif de commande 218B.

Le deuxième guide d'ondes 214B présente des propriétés similaires aux propriétés décrites pour le premier guide d'ondes 214A. Notamment, le deuxième guide d'ondes 214B présente une entrée 220B et une sortie 222B.

L'entrée 220B du deuxième guide d'ondes 214B est reliée à la sortie 222A du premier guide d'ondes 214A. Une telle propriété permet que le signal optique en sortie de l'unité de modulation 210 soit influencé à la fois par le premier anneau 216A et le deuxième anneau 216B.

Plusieurs configurations sont possibles pour relier l'entrée 220B du deuxième guide d'ondes 214B à la sortie 222A du premier guide d'ondes 214A.

Dans le cas de la figure 7, à titre d'exemple, l'entrée 220B du deuxième guide d'ondes 214B est le port In du deuxième modulateur 212B et la sortie 222B du deuxième guide d'ondes 214B est le port Through du deuxième modulateur 212B. L'unité de modulation 210 comporte un guide d'ondes intermédiaire 224. Le guide d'ondes intermédiaire 224 relie le port In 220B du deuxième guide d'ondes 214B au port Through 222A du premier guide d'ondes 214A. Dans cette configuration, l'entrée 210E de l'unité de modulation 210 est le port In 220A du premier modulateur 212A et la sortie 210S de l'unité de modulation 210 est le port Through 222B du deuxième modulateur 212B.

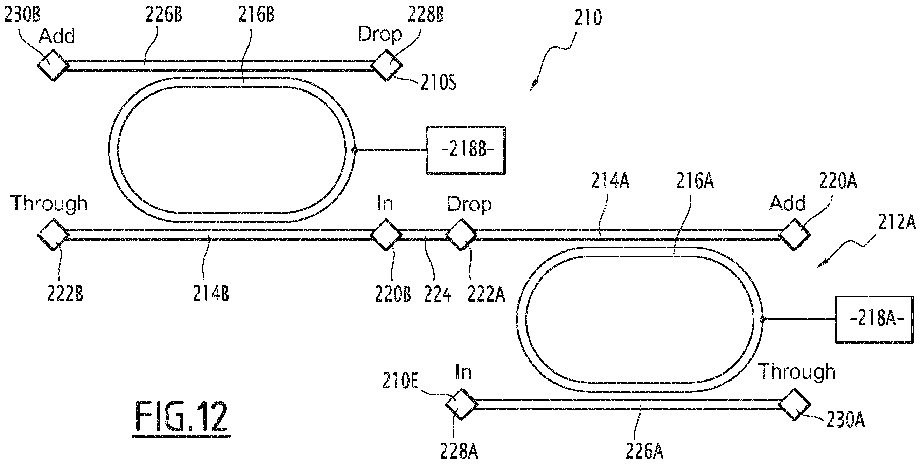

Selon un deuxième exemple illustré par la figure 12, chaque modulateur 212A, 212B comporte deux guides d'ondes couplés chacun optiquement à leurs anneaux 216A, 216B respectifs. Ainsi, le premier modulateur 212A en anneau résonant comporte le premier guide d'ondes 214A qui s'étend entre le port Add 220A et le port Drop 222A et le troisième guide d'ondes 226A qui s'étend entre le port In 228A et le port Through 230A. Similairement, le deuxième modulateur 212B en anneau résonant comporte le deuxième guide d'ondes 214B qui s'étend entre le port In 220B et le port Through 222B et le quatrième guide d'ondes 226B qui s'étend entre le port Drop 228B et le port Add 230B.

L'unité de modulation 210 comprend, en outre, un guide d'ondes intermédiaire 224 reliant le port Drop 222A du premier modulateur 212A au port In 220B du deuxième modulateur 214B. Dans ce deuxième exemple, l'entrée 210E de l'unité de modulation 210 est le port In 228A du premier modulateur 212A et la sortie 210S de l'unité de modulation 210 est le port Drop 228B du deuxième modulateur 212B.

Selon un troisième exemple non représenté, le premier guide d'ondes 214A et le deuxième guide d'ondes 214B sont confondus. Dans ce troisième exemple, l'entrée 210E du dispositif de modulation 210 est à la fois le port In du premier modulateur 212A et le port In du deuxième modulateur 212B tandis que la sortie 210S du dispositif de modulation 210 à la fois le port Through du premier modulateur 212A et le port Through du deuxième modulateur 212B.

Dans ces trois exemples, à chaque fois, l'entrée 220B du deuxième guide d'ondes 214B est reliée à la sortie 222A du premier guide d'ondes 214A.

En outre, l'entrée 210A de l'unité de modulation 210 est l'entrée du premier d'ondes 214. Cela signifie que la source lumineuse du dispositif de modulation précédemment évoquée est reliée à l'entrée 220A du premier guide d'ondes 214A.

Le deuxième anneau 216B présente des anneaux avec des propriétés similaires aux propriétés décrites pour le premier anneau 216A. Notamment, le deuxième anneau 216B présente un deuxième indice effectif Neff2.

Le deuxième anneau 216B est indépendant du premier anneau 216A.

Par définition, deux anneaux sont indépendants si l'indice effectif d'un des deux anneaux peut être varié indépendamment de l'indice effectif de l'autre anneau.

Par exemple, les deux zones extérieures des anneaux sont en contact électrique, ce contact correspondant à la masse électrique alors que les deux zones intérieures des anneaux ne sont pas en contact électrique. La tension appliquée à la zone intérieure du premier anneau est indépendante de la tension appliquée à la zone intérieure du deuxième anneau.

Le deuxième dispositif de commande 218B présente des propriétés similaires aux propriétés décrites pour le premier dispositif de commande 218A. Notamment, le deuxième dispositif de commande 218B est propre à moduler le deuxième indice effectif Neff2 du deuxième anneau 216B selon une deuxième loi de commande L2.

L'unité de modulation 210 présente au moins une caractéristique influençant le chirp introduit par l'unité de modulation 210 pour un signal optique incident. La ou les caractéristiques de l'unité de modulation 210 sont alors choisies de sorte à minimiser la valeur absolue du chirp introduit par le dispositif de l'unité de la modulation 210 pour un signal optique incident.

A titre d'exemple, en référence à l'annexe, la ou les caractéristiques sont choisies parmi l'une des caractéristiques suivantes : la distance entre le premier anneau 216A et le premier guide d'ondes 214A du premier modulateur 212A, la distance entre le deuxième anneau 216B et le deuxième guide d'ondes 214B du deuxième modulateur 212B, le rayon de courbure du premier anneau 216A du premier modulateur 212A, le rayon de courbure du deuxième anneau 216B du deuxième modulateur 212B, la longueur d'interaction entre le premier anneau 216A et le premier guide d'ondes 214A du premier modulateur 212A, la longueur d'interaction entre le deuxième anneau 216B et le deuxième guide d'ondes 214B du deuxième modulateur 212B, la première loi de commande L1, la deuxième loi de commande L2, le paramètre de couplage entre le premier anneau 216A et le premier guide d'ondes 214A du premier modulateur 212A et le paramètre de couplage entre le deuxième anneau 216B et le deuxième guide d'ondes 214B du deuxième modulateur 212B.

Selon une variante, le premier modulateur 212A en anneau résonant présente une première fonction transfert T1 définie comme le rapport entre le champ optique (c'est-à-dire le champ électrique associé à une onde lumineuse) en sortie du premier modulateur 212A et le champ optique incident. Le premier modulateur 212A présente aussi des premiers paramètres influençant la première fonction transfert T1. Comme expliqué en référence à l'annexe, les premiers paramètres sont, par exemple, la distance entre le premier anneau 216A et le premier guide d'ondes 214A du premier modulateur 212A, le rayon de courbure du premier anneau 216A du premier modulateur 212A, la longueur d'interaction entre le premier anneau 216A et le premier guide d'ondes 214A du premier modulateur 212A et la première loi de commande L1. De manière alternative, les premiers paramètres sont, par exemple, le paramètre de couplage entre le premier anneau 216A d'une part et le premier guide d'ondes 214A du premier modulateur 212A d'autre part et la première loi de commande L1. Dans cette variante, la ou les caractéristiques influençant le chirp introduit par l'unité de modulation 10 sont les premiers paramètres.

Selon une autre variante, le deuxième modulateur 212B en anneau résonant présente une deuxième fonction de transfert T2 définie comme le rapport entre le champ optique en sortie du deuxième modulateur 212B et le champ optique incident et présente des deuxièmes paramètres influençant la deuxième fonction de transfert T2. Comme expliqué en référence à l'annexe, les deuxièmes paramètres sont, par exemple, la distance entre le deuxième anneau 216B et le deuxième guide d'ondes 214B du deuxième modulateur 212B, le rayon de courbure du deuxième anneau 216B du deuxième modulateur 212B, la longueur d'interaction entre le deuxième anneau 216B et le deuxième guide d'ondes 214B du deuxième modulateur 212B et la deuxième loi de commande L2. De manière alternative, les deuxièmes paramètres sont, par exemple, le paramètre de couplage entre le deuxième anneau 216B et le deuxième guide d'ondes 214B du deuxième modulateur 212B et la deuxième loi de commande L2. Dans ce cas, la ou les caractéristiques influençant le chirp introduit par l'unité de modulation 10 sont les deuxièmes paramètres.

Selon encore une autre variante, la ou les caractéristiques influençant le chirp introduit par l'unité de modulation 210 sont les premiers paramètres et les deuxièmes paramètres ou sont choisis parmi les premiers paramètres et les deuxièmes paramètres.

De préférence, selon une variante, les deux modulateurs 212A et 212B sont identiques. Il est entendu par l'expression « modulateur identique », dans le cadre de cette invention, des modulateurs 212A et 212B présentant des paramètres de couplage identiques.

De tels modulateurs 212A et 212B sont généralement des modulateurs dont les paramètres géométriques sont identiques. Cela rend la fabrication de tels modulateurs plus aisée puisqu'il est plus facile de réaliser deux modulateurs avec les mêmes dimensions que de réaliser deux anneaux différents dont on veut espacer la longueur de résonance d'une valeur fixe souhaitée.

Dans cette variante, la ou les caractéristiques sont le ou les paramètres caractérisant la première loi de commande et la deuxième loi de commande L2.

La première loi de commande L1 et la deuxième loi de commande L2 sont telles que lorsque le premier indice effectif Neff1 varie d'une première quantité ΔNeff1, le deuxième indice effectif Neff2 varie d'une deuxième quantité ΔNeff2 opposée à la première quantité, c'est-à-dire -ΔNeff1.

Mathématiquement, cela se traduit par l'égalité ΔNeff2 = -ΔNeff1 ou ΔNeff1 +ΔNeff2 = 0.

Il en résulte que la première loi de commande L1 et la deuxième loi de commande L2 sont telles que la somme du premier indice effectif Neff1 et du deuxième indice effectif Neff2 est constante autour du temps.

A titre d'exemple, les lois de commande L1 et L2 sont deux tensions de modulation reproduisant la série de bits à transmettre en opposition de phase. De ce fait, les deux modulateurs 212A et 212B sont dits modulés en push-pull, ce qui signifie modulés par des tensions en opposition de phase. Ainsi, la première loi de commande L1 s'écrit $V_{BIAS}$ +V(t) tandis que la deuxième loi de commande L2 s'écrit $V_{BIAS}$ - V(t) où :

- V(t) est la tension de modulation, et
- $V_{BIAS}$ est une tension statique (positive ou négative selon la nature du phénomène électro-optique permettant de changer l'indice effectif de l'anneau 216A ou 216B considéré) permettant de polariser continûment le modulateur 212A ou 212B considéré.

En mode injection de porteurs, la première loi de commande L1 est une tension variant entre $V_{BIAS}$ et $V_{BIAS}$ - A, A étant une valeur positive et $V_{BIAS}$ étant une valeur strictement supérieure à A. La deuxième loi de commande L2 est alors une tension variant entre $V_{BIAS}$ et $V_{BIAS}$ + β * A, β étant une valeur strictement positive et * étant l'opération mathématique de multiplication. Dans ce cas, les deux modulateurs 212A et 212B sont polarisés continûment à la tension $V_{BIAS}$.

Plus précisément, lorsque la tension appliquée par la première loi de commande L1 varie de $V_{BIAS}$ à $V_{BIAS}$ -

A pour donner lieu à la variation d'indice de $\Delta$Neff1, la tension appliquée par la deuxième loi de commande L2 varie de $V_{BIAS}$ à $V_{BIAS} + \beta * A$ pour donner lieu à la variation d'indice $\Delta$Neff2 = -$\Delta$Neff1. Réciproquement, lorsque la tension appliquée par la première loi de commande L1 varie de $V_{BIAS} - A$ à $V_{BIAS}$ pour donner lieu à la variation d'indice correspondant à -$\Delta$Neff1, la tension appliquée par la deuxième loi de commande L2 varie de $V_{BIAS} + \beta * A$ à $V_{BIAS}$ pour donner lieu à la variation d'indice-$\Delta$Neff2.

Le tableau 1 ci-dessous donne les correspondances entre les tensions appliquées par les lois de commande L1 et L2 des modulateurs 212A et 212B selon le bit à transmettre 0 ou 1 pour assurer la génération d'une modulation sans chirp en mode injection de porteurs.

*Tableau 1*

| Bit | 1 | 0 |
|---|---|---|
| Tension appliquée sur le premier modulateur 212A | $V_{BIAS} - A$ | $V_{BIAS}$ |
| Tension appliquée sur le deuxième modulateur 212B | $V_{BIAS} + \beta*A$ | $V_{BIAS}$ |

En mode déplétion de porteurs, la première loi de commande L1 est une tension variant entre - $V_{BIAS}$ et - $V_{BIAS}$ + A, A étant une valeur positive et $V_{BIAS}$ étant une valeur strictement supérieure à A. La deuxième loi de commande L2 est une tension variant entre - $V_{BIAS}$ et - $V_{BIAS} - \beta * A$, $\beta$ étant une valeur strictement positive. Dans une telle situation, les deux modulateurs 212 A et 212B sont polarisés continûment à la tension - $V_{BIAS}$.

Plus précisément, lorsque la tension appliquée par la première loi de commande L1 varie de - $V_{BIAS}$ à - $V_{BIAS}$ + A pour donner lieu à la variation d'indice $\Delta$Neff1, la tension appliquée par la deuxième loi de commande L2 varie de - $V_{BIAS}$ à - $V_{BIAS} - \beta * A$ pour donner lieu la variation d'indice $\Delta$Neff2 = -$\Delta$Neff1. Lorsque la tension appliquée par la première loi de commande L1 varie de - $V_{BIAS}$ +A à - $V_{BIAS}$ pour donner lieu à la variation d'indice de -$\Delta$Neff1, la tension appliquée par la deuxième loi de commande L2 varie de - $V_{BIAS} -\beta * A$ à - $V_{BIAS}$ pour donner lieu à la variation d'indice -$\Delta$Neff2.

Le tableau 2 ci-dessous donne les correspondances entre les tensions appliquées par les lois de commande L1 et L2 des modulateurs 212A et 212B selon le bit à transmettre 0 ou 1, pour assurer la génération d'une modulation sans chirp en mode déplétion de porteurs.

*Tableau 2*

| Bit | 1 | 0 |
|---|---|---|
| Tension appliquée sur le premier modulateur 212A | $-V_{BIAS} + A$ | $-V_{BIAS}$ |
| Tension appliquée sur le deuxième modulateur 212B | $-V_{BIAS}-\beta*A$ | $-V_{BIAS}$ |

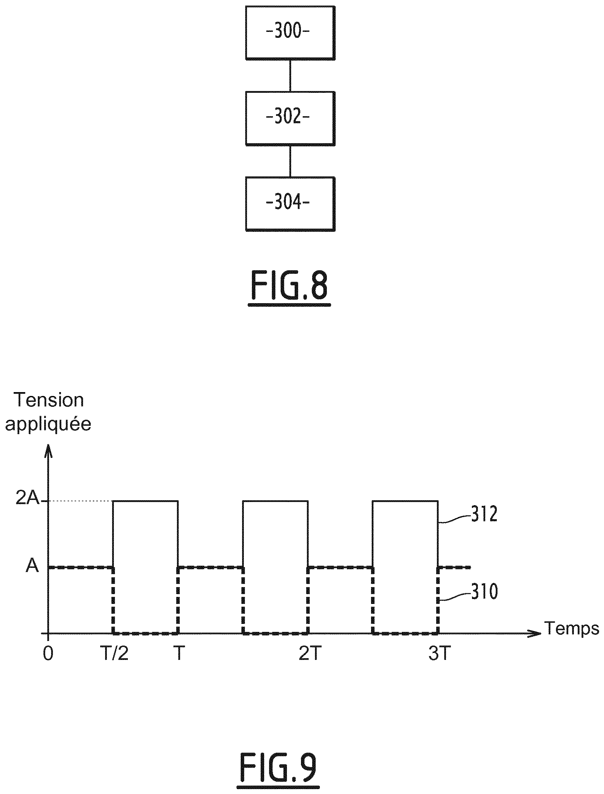

Selon le cas particulier illustré par la figure 9, en mode injection de porteurs, la tension statique $V_{BIAS}$ vaut A, A étant une valeur strictement positive. La première loi de commande L1 est alors une loi de tension binaire variant entre 0 et A, A étant une valeur strictement positive et la deuxième loi de commande L2 étant une tension binaire variant entre A et 2 * A.

Plus précisément, sur bit 0 à transmettre, une tension de modulation d'amplitude V(t) = -A est appliquée aux deux anneaux 216A et 216B tandis que, sur un bit 1, une tension d'amplitude V(t) = A est appliquée aux deux anneaux 216A et 216B.

Autrement formulé, la première loi de commande L1 et la deuxième loi de commande L2 sont telles que, lorsque la tension appliquée par la première loi de commande L1 est nulle, la tension appliquée par la deuxième loi de commande L2 est égale à 2 * A et, lorsque la tension appliquée par la première loi de commande L1 est une tension valant A, la tension appliquée par la deuxième loi de commande L2 est égale à A.

Dans le cas d'un mode en déplétion de porteurs, la tension statique $V_{BIAS}$ vaut alors -A, A étant une valeur strictement positive. La première loi de commande L1 est alors une tension binaire variante entre 0 et -A, A étant une valeur strictement positive et la deuxième loi de commande L2 est une tension binaire variant entre -A et -2 * A.

Plus précisément, sur un bit 0 à transmettre, une tension de modulation d'amplitude V(t) = -A est appliquée aux anneaux 216A et 216B tandis que sur un bit 1, une tension d'amplitude V(t) = A est appliquée aux deux anneaux 216A et 216B.

Autrement formulé, la première loi de commande L1 et la deuxième loi de commande L2 sont telles que, lorsque la tension appliquée par la première loi de commande L1 est nulle, la tension appliquée par la deuxième loi de commande L2 est égale à -A et, lorsque la tension appliquée par la première loi de commande L1 est une tension valant -A, la tension appliquée par la deuxième loi de commande L2 est égale à-2*A.

Pour de telles lois de commande, en fonctionnement, l'unité de modulation 210 est telle que le paramètre de chirp $\alpha1$ introduit par le premier modulateur 212A est opposé au deuxième paramètre de chirp $\alpha2$ introduit par le deuxième modulateur 212B..

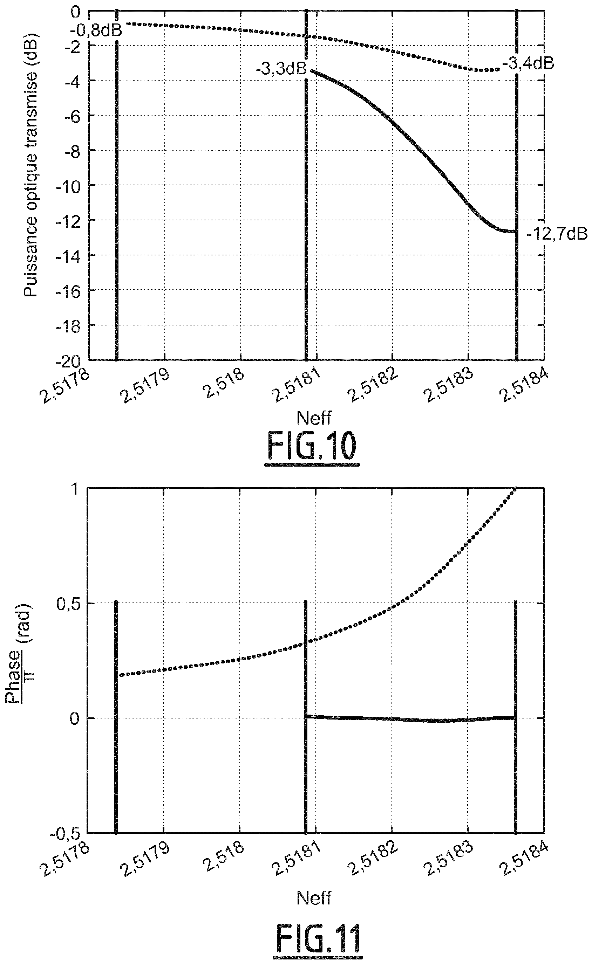

Les performances associées sont illustrées par les figures 10 et 11. Sur les figures 10 et 11, les courbes en traits pointillés sont relatives à une unité de modulation comportant un seul anneau tandis que les courbes en traits pleins correspondent à une unité de modulation 210 selon le premier exemple représenté à la figure 7. Les performances simulées le sont pour un paramètre de rayon de courbure R des anneaux 216A et 216B tel que R est égal à 5 $\mu$m, une longueur d'interaction nulle et des paramètres de couplage égaux à 0,0546.

Pour la figure 10, le tableau 3 suivant permet d'effectuer une comparaison des performances obtenues :

*Tableau 3*

|  | Etat de la technique (dB) | Unité de modulation 210 (dB) |
|---|---|---|
| Pertes de transmission sur l'état ON | -0,8 | -3,3 |
| Pertes de transmission sur l'état OFF | -3,4 | -12,7 |
| Taux d'extinction | 2,6 | 9,4 |

Il est notamment constaté que le taux d'extinction est plus élevé avec le dispositif avec l'unité de modulation proposée, ce qui est avantageux.

En outre, il apparaît à la figure 11, que le paramètre de chirp $\alpha$ est compris entre-0,3 et 0 pour une variation d'indice effectif comprise entre $3 \times 10^{-4}$ et 0. Il en résulte que le paramètre de chirp $\alpha$ est proche de 0 sur la plage de modulation optimale pour l'unité de modulation 210 selon le premier exemple.

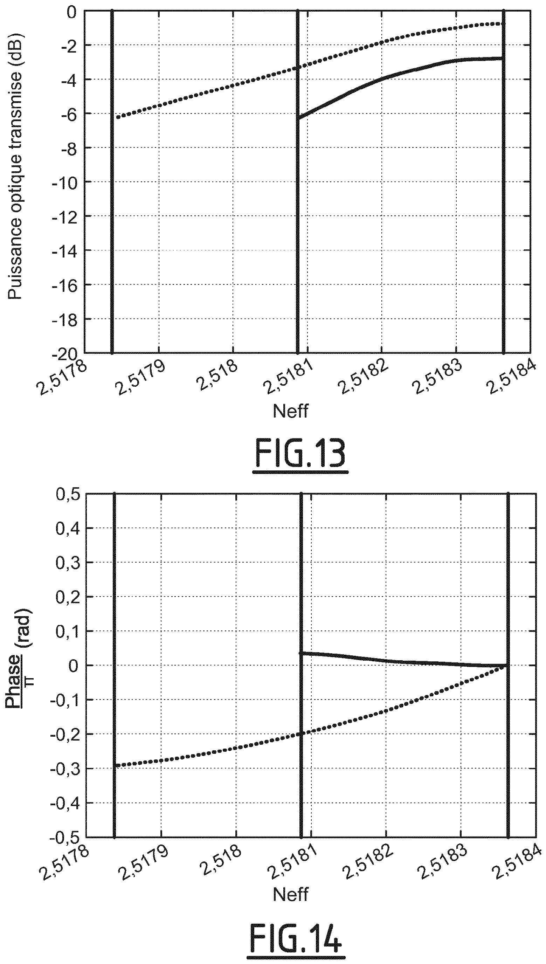

Des observations similaires sont constatables sur les figures 13 et 14 pour l'unité de modulation 210 selon le deuxième exemple dans lequel les paramètres de couplage sont pris égaux à 0,02.

Dans chacun des exemples présentés, l'unité de modulation 210 telle que proposée présente de meilleures performances qu'une unité de modulation comportant un seul modulateur en anneau résonant.

Pour contrôler un modulateur en anneaux résonants, une tension variante entre 0 et V est appliquée. On note C la capacité de l'anneau, la consommation du modulateur s'exprime comme $C * V^2$.

Dans le cas de l'unité de modulation 210, sur chaque anneau 216A et 216B, il est appliqué une tension ayant une amplitude de V/2. Plus précisément, la tension appliquée sur le premier modulateur 212A varie entre 0 et V/2 et la tension appliquée sur le deuxième modulateur 212B varie entre V/2 et V. En notant C la capacité de chacun des deux anneaux 216A et 216B, la consommation de l'unité de modulation 210 est donnée par :

$$2 * C * (V/2)^2 = C * V^2/2$$

Ainsi, l'unité de modulation 210 telle que proposée consomme deux fois moins d'énergie électrique qu'une unité de modulation comprenant un seul modulateur en anneau résonant permettant de générer une modulation en intensité d'un signal optique.

En outre, la longueur d'onde de fonctionnement de l'unité de modulation 210, le taux d'extinction est plus grand pour l'unité de modulation 210 telle que proposée par rapport à une unité de modulation comprenant un seul modulateur en anneau résonant.

La modulation du signal optique est donc de meilleure qualité lorsque l'unité de modulation 210 telle que proposée est utilisée.

De plus, l'excursion de la phase du champ optique en sortie de l'unité de modulation 210 telle que proposée est également réduite par rapport à l'excursion en sortie de l'unité de modulation avec un seul modulateur en anneau résonant. A l'observation des figures 11 et 14, il apparait bien que la phase présente une excursion bien plus faible que l'excursion de la phase observée pour un système de modulation comprenant un seul modulateur en anneau.

Les valeurs des caractéristiques influençant le chirp pour l'unité de modulation 210 sont, par exemple, obtenues par un procédé d'annulation. Ce procédé d'annulation est décrit en référence à l'ordinogramme de la figure 8.

Le procédé comporte une étape 300 de choix de caractéristiques de départ pour l'unité de modulation 210.

Le procédé comporte alors une étape 302 de modifications d'au moins une des caractéristiques de départ de l'unité de modulation 210 de sorte à minimiser la valeur absolue du chirp introduit par l'unité de modulation 210 pour un signal optique incident.

A titre d'illustration, cette modification est effectuée par une série d'itérations dans un programme d'optimisation. Le but de ce programme d'optimisation, en partant de caractéristiques initiales, est d'obtenir les caractéristiques de l'unité de modulation 210 conférant à l'unité de modulation 210 un paramètre de chirp α s'approchant autant que possible de la valeur nulle.

Pour cela, une fonction de coût C, représentative des écarts pour le paramètre de chirp α entre l'unité de modulation 210 commandée par les lois de commande en tension à optimiser et la valeur nulle est définie comme suit. La fonction de coût C est écrite sous la forme suivante est considérée :

$$C = \alpha i^2$$

Où :

- αi est la valeur du paramètre de chirp α introduit par l'unité de tension 210 sur laquelle sont appliquées les lois de commande en tension à optimiser à la i-ème itération.

La valeur αi est calculée à l'aide d'une simulation numérique.

La fonction de coût C ainsi définie est une fonction positive qu'il convient de minimiser au cours de l'étape 202 de modification des lois de commande.

Pour procéder à une telle minimisation, il suffit de partir des caractéristiques choisies initialement à l'étape 300 de choix des caractéristiques et d'utiliser une méthode de calcul permettant de faire diminuer par itération la valeur de la fonction de coût C.

A titre d'exemple, la méthode de calcul utilisée est une méthode des moindres carrées amortis (souvent appelée sous l'acronyme anglais DLS pour « Damped Least-Squares »).

Des caractéristiques à appliquer à l'unité de modulation 210 sont ainsi obtenues pour l'unité de modulation 210, après itérations du programme d'optimisation.

Le procédé d'annulation proposé présente l'avantage d'être de mise en oeuvre aisée.

Dans une variante préférée, l'annulation du paramètre de chirp α est obtenue sans itérations, un calcul permettant d'obtenir les caractéristiques conduisant à une telle annulation.

Selon des modes de réalisation préférés, à l'étape 300 de choix, les caractéristiques de départ pour l'unité de modulation 210 sont telles que les deux modulateurs 212A et 212B en anneau résonant sont identiques. Cela permet de simplifier encore plus la mise en oeuvre du procédé d'annulation.

Pour augmenter encore cet effet, à l'étape 304 de modification, seules les caractéristiques relatives à la première loi de commande L1 et les caractéristiques relatives à la deuxième loi de commande L2 sont modifiées. Dans une telle situation, le calcul peut être effectué sans utiliser d'itérations.

Par exemple, à l'étape 304 de modification, la première loi de commande L1 et la deuxième loi de commande L2 sont modifiées de sorte, lorsque le premier indice effectif Neff1 varie d'une première quantité, le deuxième indice effectif Neff2 varie d'une deuxième quantité opposée à la première quantité. Cela permet d'obtenir, à titre d'illustration, les lois de commande L1 et L2 obtenues en référence à la figure 9.

En pratique, le bon fonctionnement des deux modulateurs 212A et 212B en anneau résonant est notamment sensible à la température du milieu ambiant et à des variations dans la mise en oeuvre du procédé de fabrication de ces modulateurs 212A et 212B. De ce fait, peuvent survenir des désalignements entre la longueur d'onde d'émission de la source laser alimentant l'unité de modulation 210 et la longueur d'onde de résonance du premier anneau 216A d'une part, et la longueur d'onde de la source laser et la longueur d'onde de résonance du deuxième anneau 216B d'autre part. Pour rappel, la longueur d'onde de résonance de chacun des anneaux 216A et 216B, est contrôlée par un dispositif de commande 218A et 218B respectif. Les désalignements en longueur d'onde se traduisent par un dysfonctionnement de l'unité de modulation 210.

Pour éviter de tels désalignements, il est proposé un procédé de calibration et un procédé d'asservissement.

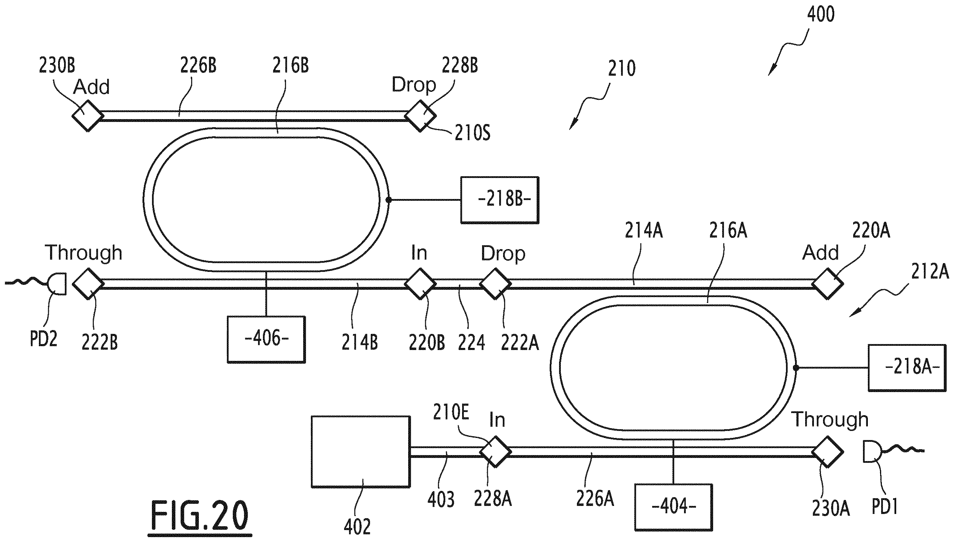

Le procédé de calibration utilise un système de calibration de l'unité de modulation 210. Un exemple de tel système de calibration 400 est représenté à la figure 20.

Selon l'exemple de la figure 20, le système de calibration 400 comporte une source laser étalon 402, une unité de modulation 210, une première photodiode PD1 et une deuxième photodiode PD2.

La source laser étalon 402 est une source laser propre à émettre une onde dont la longueur d'onde est référencée en absolue. De ce fait, la longueur d'onde d'émission de la source étalon 402 est supposée fixe pour le système de calibration 400 et est noté dans la suite $\lambda_{calibration}$.

La source laser étalon 402 est reliée à l'entrée 210E de l'unité de génération de modulation 210, par exemple via un guide d'ondes 403. La source laser étalon 402 est ainsi propre à injecter une onde dont la longueur d'onde de calibration $\lambda_{calibration}$ est référencée en absolu.

Dans le cas de la figure 20, l'unité de modulation 210 est l'unité de modulation 210 telle que représentée à la figure 12, c'est-à-dire l'unité de modulation 210 selon le deuxième exemple.

De plus, l'unité de modulation 210 est munie de deux unités de décalage de la longueur d'onde de résonance 404 et 406.

La première unité de décalage 404 est propre à décaler la longueur d'onde de résonance du premier modulateur 212A. Un tel décalage est, selon la première unité de décalage 404 considérée, un décalage vers les longueurs d'onde plus élevées ou plus basses.

A titre d'exemple, la première unité de décalage 404 est un organe de chauffage du premier anneau 216A permettant de modifier localement la température du premier anneau 216A et donc l'indice de propagation du premier anneau 216A. Ceci résulte en une modification de la longueur d'onde de résonance du premier modulateur 212A.

La deuxième unité de décalage 406 est propre à décaler la longueur d'onde de résonance du deuxième modulateur 212B. Un tel décalage est, selon la deuxième unité de décalage 404 considérée, un décalage vers la longueur d'onde plus élevée ou plus basse.

A titre d'exemple, la deuxième unité de décalage 404 est un organe chauffage du deuxième anneau 216B permettant de modifier localement la température du deuxième anneau 216B et donc l'indice de propagation du deuxième anneau 216B. Ceci résulte en une modification de la longueur d'onde de résonance du deuxième modulateur 212B

En variante, le système de calibration 400 s'applique à tout type de unité de modulation 210 tel que décrite dans la présente demande.

La première photodiode PD1 est positionnée en sortie du port Through 230A du premier anneau 216A. la première photodiode PD1 est donc propre à récolter le signal en sortie du port Through 230A.

En variante, un autre type de photodétecteur peut être utilisé à la place de la première photodiode D1.

La deuxième photo- diode PD2 est positionnée en sortie du port Through 22B du deuxième anneau 216B. La deuxième photodiode PD2 est donc propre à récolter le signal en sortie du port Through 222B.

En variante, un autre type de photodétecteur peut être utilisé à la place de la deuxième photodiode D2.

Le fonctionnement du système de calibration 400 est maintenant décrit en référence à la mise en oeuvre d'un exemple de procédé de calibration de l'unité de modulation 210.

Dans le cas général, avant la mise en oeuvre du procédé de calibration, la longueur d'onde de résonance du premier modulateur 212A, la longueur d'onde de résonance du deuxième modulateur 212B et la longueur d'onde $\lambda_{calibration}$ d'émission de la source laser étalon 402 sont distinctes deux à deux.

Le procédé de calibration comporte, d'abord, une étape d'injection d'une onde à une longueur d'onde de référence dans l'unité de modulation 210. L'étape d'injection est mise en oeuvre par injection d'une onde issue de la source laser étalon 402 en entrée de l'unité de modulation 210. La longueur d'onde de référence est, ainsi, la longueur d'onde $\lambda_{calibration}$ d'émission de la source laser étalon 402.

Le procédé de calibration comporte, ensuite, une étape d'ajustement de la longueur d'onde de résonance du premier modulateur 212A sur la longueur d'onde de référence $\lambda_{calibration}$ par utilisation du signal en sortie 222A du premier guide d'ondes 214A, lorsque l'onde à la longueur d'onde $\lambda_{calibration}$ d'émission de la source laser 402 est injectée dans l'unité de modulation 210.

L'étape d'ajustement de la longueur d'onde de résonance du premier modulateur 212A est mise en oeuvre en utilisant la première unité de décalage 404 pour faire coïncider un minimum de transmission de la fonction transfert du premier modulateur 212A avec la longueur d'onde $\lambda_{calibration}$ d'émission de la source laser étalon 402.

Une manière commode d'obtenir une telle coïncidence est d'utiliser le signal de la première photodiode PD1. En effet, l'observation d'un minimum local d'intensité sur le signal de la première photodiode PD1 correspond à l'occurrence d'une coïncidence entre un minimum de transmission de la fonction transfert du premier modulateur 212A avec la longueur d'onde $\lambda$ calibration d'émission de la source laser étalon 402.

En d'autres termes, selon un mode de réalisation préféré, l'étape d'ajustement de la longueur d'onde de résonance du premier modulateur 212A est mise en oeuvre en réglant la première unité de décalage 404 jusqu'à observer un minimum d'intensité dans le signal de la photodiode PD1.

A l'issue de l'étape d'ajustement de la longueur d'onde de résonance du premier modulateur 212A, la longueur d'onde $\lambda$calibration d'émission de la source laser étalon 402 et la longueur d'onde de résonance du premier modulateur 212A sont égales.

Le procédé de calibration comporte, ensuite, une étape d'ajustement de la longueur d'onde de résonance du deuxième modulateur 212B sur la longueur d'onde de référence $\lambda_{calibration}$ par utilisation du signal en sortie 228B du deuxième guide d'ondes 214B lorsque l'onde à la longueur d'onde $\lambda_{calibration}$ d'émission de la source laser étalon 402 est injectée dans l'unité de modulation 210.

L'étape d'ajustement de la longueur de résonance du deuxième modulateur 212B est mise en oeuvre en utilisant la deuxième unité de décalage 406 pour faire coïncider un minimum de transmission de la fonction transfert du deuxième modulateur 212B avec la longueur d'onde $\lambda_{calibration}$ d'émission de la source laser étalon 402.

Une manière commode d'obtenir une telle coïncidence est d'utiliser le signal de la deuxième photodiode PD2. En effet, l'observation d'un minimum local d'intensité sur le signal de la deuxième photodiode PD2 correspond à l'occurrence d'une coïncidence entre un minimum de transmission de la fonction transfert de deuxième modulateur 212B avec la longueur d'onde $\lambda_{calibration}$ d'émission de la source laser étalon 402.

En d'autres termes, selon un mode de réalisation préféré, l'étape d'ajustement de la longueur d'onde de résonance du deuxième modulateur 212B est mise en oeuvre en réglant la deuxième unité de décalage 406 jusqu'à observer un minimum d'intensité dans le signal de la deuxième photodiode PD2.

A l'issue de l'étape d'ajustement de la longueur d'onde de résonance du deuxième modulateur 212B, la longueur d'onde $\lambda_{calibration}$ d'émission de la source laser étalon 402 et la longueur d'onde de résonance du deuxième modulateur 212B sont égales.

Le procédé de calibration permet donc d'aligner les longueurs d'onde de résonance des deux modulateurs 212A et 212B sur une longueur d'onde de référence pourvu qu'on dispose d'une source laser propre à émettre à longueur d'onde de référence désirée.

Le procédé de calibration proposé présente l'avantage d'être facile à mettre en oeuvre puisque seul l'ajout de deux photodétecteurs sur un port non utilisé du premier modulateur 212A et le port non utilisé du modulateur 212B est impliqué. En outre, le procédé de calibration est robuste.

Le procédé d'asservissement utilise un système d'asservissement permettant d'asservir la longueur d'onde d'une source laser sur la longueur d'onde de résonance du deuxième modulateur 212B à anneau.

Un exemple de tel système d'asservissement 500 est représenté à la figure 15.

Le système d'asservissement 500 est similaire au système de calibration 400 décrit en référence à la figure 20. De ce fait, seuls les éléments différents sont détaillés dans ce qui suit, sachant que les autres remarques décrivant le système de calibration 400 sont également valables pour le système d'asservissement 500.

Au lieu de la source étalon 402, le système d'asservissement 500 comporte une source laser 502 qui n'est pas une source étalon. Ainsi, la source laser 502 du système d'asservissement 500 est propre à émettre une onde à une longueur d'onde susceptible de varier au cours du temps, notamment à cause de l'échauffement thermique.

Le système d'asservissement 500 comporte une unité de contrôle 504 de la source laser 502 reliée d'une part à la deuxième photodiode PD2 et d'autre part à la source laser 502.

L'unité de contrôle 504 est propre à convertir le signal de la deuxième photodiode PD2 en un signal d'asservissement. Ce signal d'asservissement sert à générer une commande de la source laser 502 permettant de modifier la longueur des ondes d'émission de la source laser 502.

Typiquement, l'unité de contrôle 504 comporte un comparateur et un actionneur. Le comparateur est propre à comparer l'écart entre la valeur actuelle du signal et la deuxième photodiode PD2 et une valeur idéale et à convertir cet écart en une consigne permettant de réduire l'écart. L'actionneur est propre à appliquer la consigne sur la source laser 502. Par exemple, la consigne est une valeur de courant.

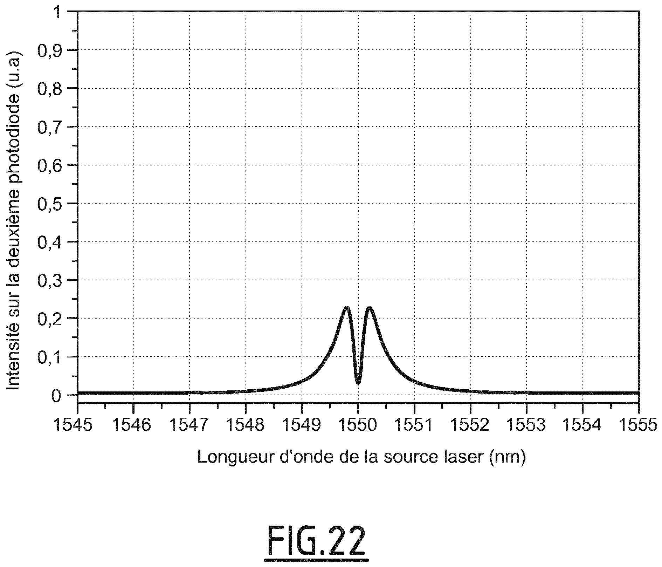

Le procédé d'asservissement composé repose sur l'exploitation de la forme de la réponse spectrale de la deuxième photodiode PD2. Cette forme est illustrée sur la figure 22. Il apparaît que la réponse spectrale de la deuxième photodiode PD2 présente un minimum local d'intensité lorsque la longueur d'onde la source laser 502 est parfaitement alignée avec les longueurs d'onde de résonance des deux modulateurs 212A et 212B en anneau. En utilisant la réponse spectrale de la deuxième photodiode PD2 comme signal d'erreur, il est donc possible d'asservir la longueur d'onde de la source laser 502.

Le procédé d'asservissement proposé présente l'avantage d'être facile à mettre en oeuvre et d'être robuste.

## 6.2.2 - GENERALITES SUR LES MODULATEURS EN ANNEAU (ANNEXE)

Dans les transmissions optiques, des dispositifs de modulation d'intensité optique sont généralement utilisés. Il en existe de deux types.

Certains dispositifs de modulation ont la capacité de moduler directement l'intensité optique de l'onde lumineuse incidente lorsqu'une commande électrique modulée est appliquée au dispositif. Le modulateur à électro-absorption, souvent désigné par l'acronyme EAM qui renvoie à la terminologie anglaise « electro-absorption modulator », est un exemple de tels dispositifs.

D'autres modulateurs modulent la phase du champ optique de l'onde lumineuse incidente. En agençant un modulateur de phase dans un interféromètre, il est alors possible d'obtenir un dispositif de modulation propre à moduler l'intensité optique de l'onde lumineuse incidente. Le modulateur Mach-Zehnder et le modulateur en anneau résonant font partie de ce type de modulateur.

Le modulateur en anneau résonant est souvent désigné par son acronyme anglais RRM pour « Ring Resonator Modulator ». Ce dispositif est plus particulièrement bien connu dans la technologie « photonique silicium » ou « photonique CMOS », dans laquelle le modulateur est implémenté sur un substrat silicium comprenant un empilement « silicium sur isolant ». Le modulateur en anneau résonant, tel que réalisé dans la technologie « photonique silicium » est décrit par exemple dans les articles de Sasikanth Manipatruni, intitulé "Ultra-low voltage, ultra-small mode volume silicon microring modulator", paru dans la revue OPTICS EXPRESS, volume 18, numéro 17 datée du 16 août 2010 et de Lin Zhang, intitulé « Silicon-Based Microring Resonator Modulators for Intensity Modulation » paru dans la revue IEEE JOURNAL OF SELECTED TOPICS IN QUANTUM ELECTRONICS, volume 16, numéro 1, datée de janvier/février 2010.

Un tel modulateur 212 en anneau résonant est, par exemple, illustré par la figure 15.

Le modulateur 212 comporte un guide d'ondes 214 possédant une entrée et une sortie et un guide d'ondes en anneau 216. Le guide d'ondes en anneau est noté simplement anneau 216 dans la suite de l'annexe.

L'entrée 220 du premier guide d'ondes 214 est un premier port d'injection de lumière 220 pour le modulateur 212 noté sous la terminologie anglaise « port In ».

La sortie 222 du premier guide d'ondes 214 est un premier port de sortie de lumière 222 pour le modulateur 212 noté sous la terminologie anglaise « port Through ».

Les terminologies anglaises précédentes étant généralement utilisées par l'homme du métier du domaine seront utilisées dans la suite de l'annexe. Ainsi l'entrée 220 du premier guide d'ondes 214 sera appelée port In et la sortie 222 du guide d'ondes 214 sera appelée port Through.

Un guide d'ondes en anneau 216 est un guide d'ondes ayant la forme d'une boucle fermée.

L'anneau 216 présente, selon l'exemple de la figure 15, une forme sensiblement oblongue. Un tel anneau 216 est souvent désigné sous l'appellation anglaise de « racetrack » du fait de sa similitude avec une piste de course automobile.

En variante, l'anneau 216 a une forme circulaire.

L'anneau 216 est couplé optiquement au guide d'ondes 214. Cela signifie que l'agencement de l'anneau 216 et du guide d'ondes 214 est tel qu'une partie de la lumière guidée dans le guide d'ondes 214 est propre à se coupler puis à être guidée dans l'anneau 216.

Un tel couplage est usuellement caractérisé par un paramètre de couplage noté K. Par définition, le paramètre de couplage K en amplitude est le ratio de l'amplitude du champ optique qui est couplé depuis le guide d'ondes vers l'anneau par rapport à l'amplitude du champ optique incident dans le guide d'ondes.

Le mode se propageant dans l'anneau 216 est caractérisé par un indice effectif Neff. Il est entendu par l'expression « indice effectif » l'indice du mode guidé dans l'anneau 216.

Le modulateur 212 comporte également un dispositif de commande 218 propre à moduler l'indice effectif Neff de l'anneau 216 selon une loi de commande.

A titre d'exemple, le dispositif de commande 218 est propre à appliquer une tension de modulation entre les zones extérieures dopées N (ou P) et la zone intérieure dopée P (respectivement N) de l'anneau 216 de sorte que l'indice effectif Neff de l'anneau 216 varie. Ainsi, le dispositif de commande 218 module l'indice effectif Neff de l'anneau 216 entre une valeur N0 (correspondant à une tension V0) à Nmax (correspondant à une tension Vmax).

Par définition, lorsque l'indice effectif de l'anneau 216 est égal à la valeur N0, le modulateur 212 est dans l'état ON. L'intensité optique mesurée en sortie du modulateur 212 dans cet état ON est appelée $I_{ON}$. Similairement, lorsque l'indice effectif de l'anneau 216 est égal à la valeur Nmax, le modulateur 212 est dans l'état OFF. L'intensité optique mesurée en sortie du modulateur 212 dans cet état OFF est appelée $I_{OFF}$.

Un des moyens de caractériser les performances du modulateur 212 est de donner son taux d'extinction ER

$$ER = 10.\log\left[\frac{I_{ON}}{I_{OFF}}\right].$$

qui est défini par

En fonctionnement, lorsque de la lumière, issue par exemple d'une diode laser, est injectée au niveau du port In du modulateur 212, la lumière est guidée dans le guide d'ondes 214. Une partie de cette lumière est couplée dans l'anneau 216. Après s'être propagée un certain nombre de fois dans l'anneau 216, la lumière est redécouplée dans le guide d'ondes 214. Lorsque le chemin optique parcouru dans l'anneau 216 correspond à un nombre entier de fois la longueur d'onde de la lumière, une résonance se créé dans l'anneau 216, se traduisant par un minimum de transmission, à cette longueur d'onde, dite de résonance, au port Through du guide d'ondes 214.

Cette longueur d'onde de résonance se décale lorsque l'indice effectif de propagation du mode dans l'anneau 216 varie, sous l'action d'un dispositif de commande 218. A une longueur d'onde donnée, une variation de la transmission optique apparaît alors en fonction de la loi de commande.

Dans certains cas comme illustré pour l'exemple de la figure 15, le modulateur 212 comprend également un deuxième guide d'ondes 226 possédant une entrée 230 et une sortie 218. Le guide d'ondes 214 est alors désigné sous l'expression « premier guide d'ondes ».

L'entrée 230 du deuxième guide d'ondes 226 est un deuxième port d'injection de lumière 230 pour le modulateur 212 noté sous la terminologie anglaise « port Add ».

La sortie 218 du deuxième guide d'ondes 226 est un deuxième port de sortie de lumière 218 pour le modulateur 212 noté sous la terminologie anglaise « port Drop ».

Les terminologies anglaises précédentes étant généralement utilisées par l'homme du métier du domaine seront utilisées dans la suite de l'annexe. Ainsi l'entrée 230 du deuxième guide d'ondes 226 sera appelée port Add et la sortie 218 du deuxième guide d'ondes 226 sera appelée port Drop.

L'anneau 216 est également couplé optiquement au deuxième guide d'ondes 226.

En fonctionnement, lorsque de la lumière, issue par exemple d'une diode laser, est injectée au niveau du port In du modulateur 212, la lumière est guidée dans le premier guide d'ondes 214. Une partie de cette lumière est couplée dans l'anneau 216. Après s'être propagée un certain nombre de fois dans l'anneau 216, la lumière est redécouplée dans le deuxième guide d'ondes 226. Lorsque le chemin optique parcouru dans l'anneau 216 correspond à la somme d'un nombre entier de fois la longueur d'onde de la lumière avec la moitié de la longueur d'onde de la lumière, une résonance se créé dans l'anneau 216, se traduisant par un maximum de transmission, à cette longueur d'onde, dite de résonance, au port Drop du deuxième guide d'ondes 226.

Cette longueur d'onde de résonance se décale lorsque l'indice effectif de propagation du mode dans l'anneau 216 varie, sous l'action d'un dispositif de commande 218. A une longueur d'onde donnée, une variation de la transmission optique apparaît alors en fonction de la loi de commande.

Dans la configuration illustrée par la figure 15, deux modes de fonctionnement ont donc été décrits, l'un correspondant à une première fonction de transfert appelée « fonction Through » dans la suite en référence au fait que la sortie du modulateur 212 utilisée dans cette configuration est le port Through et une deuxième fonction de transfert appelée « fonction Drop » dans la suite en référence au fait que la sortie du modulateur 212 utilisée dans cette configuration est le port Drop. Les fonctions Through et Drop sont les mêmes que le modulateur 212 soit utilisé en mode injection de porteurs ou en mode déplétion de porteurs.

Pour exprimer mathématiquement ces différentes fonctions, il convient, dans un premier temps, de définir des paramètres caractérisant le modulateur 212. Dans un souci de clarté, nous allons définir ces paramètres pour la géométrie spécifique du modulateur 212 de la figure 15, étant entendu que l'homme du métier saura définir ces paramètres pour une géométrie quelconque.

Dans le cas de la figure 15, l'anneau 216 comporte quatre tronçons : deux tronçons intermédiaires 231 et 232 reliés à deux tronçons d'extrémités 233 et 234. Chaque tronçon 231, 232, 233, 234 est délimité par des traits pointillés 236.

Chaque tronçon intermédiaire 231, 232 de l'anneau 216 est un tronçon rectiligne s'étendant le long d'un axe X.

Le premier tronçon intermédiaire 231 est le tronçon qui est le plus proche du premier guide d'ondes 214.

La distance d1 entre le premier tronçon intermédiaire 231 et le premier guide d'ondes 214 est appelée, dans la suite, la distance entre le premier guide d'ondes 214 et l'anneau 216.

Le premier tronçon intermédiaire 231 s'étend entre une première extrémité 238 et une deuxième extrémité 240.

La distance entre les deux extrémités 238 et 240 du premier tronçon intermédiaire 231 définit la longueur L1 du premier tronçon intermédiaire 231. Cette longueur L1 correspond à la longueur d'interaction entre l'anneau 216 et le premier guide d'ondes 214.

Selon la variante dans laquelle l'anneau 216 est circulaire, la longueur L1 est nulle.

Le deuxième tronçon intermédiaire 232 est le tronçon qui est le plus proche du deuxième guide d'ondes 226.

La distance d2 entre le deuxième tronçon intermédiaire 232 et le deuxième guide d'ondes 226 est appelée, dans la suite, la distance entre le deuxième guide d'ondes 226 et l'anneau 216.

Le deuxième tronçon intermédiaire 232 s'étend entre deux extrémités 242 et 244.

La distance entre les deux extrémités 242 et 244 du deuxième tronçon intermédiaire 232 définit la longueur L2 du deuxième tronçon intermédiaire 232. Cette longueur L2 correspond à la longueur d'interaction entre l'anneau 216 et le deuxième guide d'ondes 226.

Selon la variante dans laquelle l'anneau 226 est circulaire, la longueur L2 est nulle.

Selon l'exemple particulier de la figure 15, les deux longueurs d'interaction L1, L2 sont égales, ce qui s'écrit mathématiquement par la relation L1 = L2 = L.

Les deux tronçons d'extrémité 233 et 234 sont des guides d'ondes en forme de demi-cercles de même rayon de courbure R.

Par abus de langage, le rayon de courbure R des tronçons d'extrémités 233 et 234 est considéré comme le rayon de courbure de l'anneau 216.

Selon une variante, les deux rayons de courbures des deux tronçons d'extrémité 233, 234 sont différents. Dans ce cas, le rayon de courbure de l'anneau 226 est une moyenne des deux rayons de courbure des deux tronçons d'extrémité 233 et 234.

Ainsi, en toute généralité, l'anneau 216 est caractérisé par cinq distances qui sont :

- la distance d1 entre l'anneau 216 et le premier guide d'ondes 214 du modulateur 212,
- la distance d2 entre l'anneau 216 et le deuxième guide d'ondes 226 du modulateur 212,
- le rayon de courbure R de l'anneau 216 du modulateur 212,
- la longueur d'interaction L1 entre l'anneau 216 et le premier guide d'ondes 214 du modulateur 212, et
- la longueur d'interaction L2 entre l'anneau 216 et le deuxième guide d'ondes 226 du modulateur 212.

Le modulateur 212 n'est pas seulement caractérisé par des paramètres géométriques tels que précédemment présentés. Le modulateur 212 est également caractérisable par d'autres paramètres qui sont :

- la loi de commande en tension appliquée à l'anneau 216 du modulateur 212,
- le paramètre de couplage k1 entre l'anneau 216 et le premier guide d'ondes 314 du modulateur 212, et
- le paramètre de couplage k2 entre l'anneau 216 et le deuxième guide d'ondes 326 du modulateur 212.

Il est à noter que les paramètres de couplages k1 et k2 incluent les paramètres de type géométrique puisque ces paramètres dépendent de la longueur d'interaction L1 et L2 ainsi que des distances d1 et d2 entre le guide d'ondes considéré et l'anneau 216.

En outre, toute combinaison linéaire ou grandeur issue des paramètres précédents par une fonction mathématique est susceptible d'être utilisée pour caractériser le modulateur 212.

Ainsi que montré dans la suite de la description, ces paramètres permettent d'exprimer des fonctions de transfert pour le modulateur 212.

Pour cela, il est courant de définir une matrice de transfert de l'anneau 216. Cette matrice de transfert M est définie par la relation suivante :

$$\begin{vmatrix} E_{add}(t) \\ E_{drop}(t) \end{vmatrix} = M \begin{vmatrix} E_{in}(t) \\ E_{Through}(t) \end{vmatrix}$$

Où :

- $E_{addd}$ (t) est le champ optique au port Add de l'anneau 216
- $E_{Drop}$ (t) est le champ optique au port Drop de l'anneau 216
- $E_{in}$ (t) est le champ optique au port In de l'anneau 216, et
- $E_{Through}$ (t) est le champ optique au port Through de l'anneau 216.

La matrice de transfert M s'écrit :

$$M = H_2.G.H_1$$

Où:

$$H_1 = -\frac{1}{ik_1^2} \begin{vmatrix} -\sqrt{1-k_1^2} & e^{-i\beta L} \\ -e^{i\beta L} & \sqrt{1-k_1^2} \end{vmatrix},$$

$$H_2 = -\frac{1}{ik_2^2} \begin{vmatrix} -\sqrt{1-k_2^2} & e^{-i\beta L} \\ -e^{i\beta L} & \sqrt{1-k_2^2} \end{vmatrix},$$

$$G = \begin{vmatrix} 0 & \alpha.e^{i\beta R} \\ \frac{1}{\alpha}.e^{-i\beta R} & 0 \end{vmatrix},$$

- $\alpha = a^2$ est l'atténuation de l'intensité optique après un tour d'anneau 216,
- $\lambda_{OPT}$ est la longueur d'onde de la lumière en entrée du modulateur 212, et

$$\beta = \frac{2\pi N_{eff}}{\lambda_{OPT}}.$$

Pour un champ optique $E_{in}$ en entrée du modulateur, dont la puissance optique $P_{in}$ vaut 1 et la phase $\Phi_{in}$ est nulle (une simple normalisation permet de se ramener à ce cas), cette relation matricielle permet de déduire les fonctions de transfert dites « fonction Drop » et « fonction Through » définies précédemment.

La figure 16 est un graphe illustrant l'évolution du module de la fonction de transfert dite fonction Drop, c'est-à-dire la variation de l'intensité transmise au port Drop, en fonction de la longueur d'onde de la lumière en entrée de l'anneau 216. La courbe en pointillés illustre l'évolution du module fonction de transfert sans variation de l'indice effectif de l'anneau 216 alors que la courbe en traits pleins montre l'évolution du module fonction de transfert en présence d'une variation de l'indice effectif de l'anneau 216 de $2.10^{-4}$. Dans le cadre de cette simulation, les valeurs caractéristiques prises pour l'anneau 216 sont R = 5$\mu$m, L = 0, P = 2dB/cm et k = 0,2. Il est observé un décalage du maximum de la fonction de transfert.

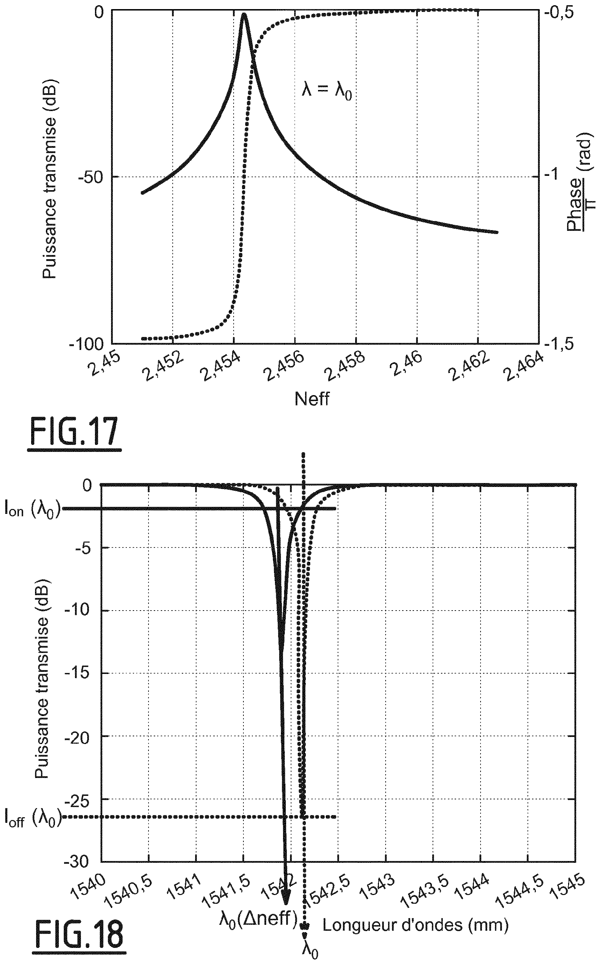

Dans les mêmes conditions de simulations, la figure 17 est un graphe montrant l'évolution du module de la fonction de transfert dite fonction Drop ainsi que de la phase de la fonction de transfert dite fonction Drop à la longueur d'onde de résonance en fonction de l'indice effectif Neff de l'anneau 216. Il apparaît qu'il est possible de faire varier l'intensité du champ optique transmise sur le port Drop. Dans l'exemple considéré, le taux d'extinction du modulateur est de 6,8 dB pour une variation d'indice effectif de $2.10^{-4}$. En outre, il est à noter que le paramètre de chirp $\alpha$ calculé est égal à 2,4.

La figure 18 est un graphe illustrant l'évolution du module de la fonction de transfert dite fonction Drop, c'est-à-dire la variation de l'intensité transmise au port Through, en fonction de la longueur d'onde de la lumière en entrée de l'anneau 216. La courbe en pointillés illustre l'évolution du module fonction de transfert sans variation de l'indice effectif de l'anneau 216 alors que la courbe en traits pleins montre l'évolution du module fonction de transfert en présence d'une variation de l'indice effectif de l'anneau 216 de $2.10^{-4}$. Dans le cadre de cette simulation, les valeurs caractéristiques prises pour l'anneau 216 sont R = 5 $\mu$m, L = 0, P = 2dB/cm, k1 = 0,2 et k2 = 0. Il est observé un décalage du minimum de la fonction de transfert.

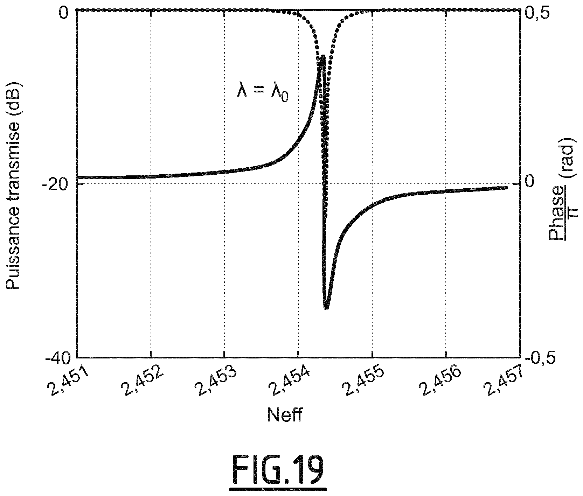

Dans les mêmes conditions de simulations, la figure 19 est un graphe montrant l'évolution du module de la fonction de transfert dite fonction Through ainsi que de la phase de la fonction de transfert dite fonction Through à la longueur d'onde de résonance en fonction de l'indice effectif Neff de l'anneau 216. Il apparaît qu'il est possible de faire varier l'intensité du champ optique transmise sur le port Through. Dans l'exemple considéré, le taux d'extinction du modulateur est de 25 dB pour une variation d'indice effectif de $2.10^{-4}$. En outre, il est à noter que le paramètre de chirp $\alpha$ est très grand et variable dans le temps.

Du point de vue technologie de fabrication, de manière générale, le modulateur en anneau 212 est réalisable dans toute technologie montrant un effet électro-optique, c'est-à-dire un changement de l'indice effectif du guide d'ondes en anneau sous l'effet d'une tension (ou d'un courant). Le phosphure d'indium (souvent désigné sous sa formule chimique InP) ou le niobate de lithium (souvent désigné sous sa formule chimique LiNbO3) sont des exemples de technologie montrant un effet électro-optique. La technologie photonique Silicium offre également de telles propriétés électro-optiques : ainsi, il est possible de moduler l'indice effectif d'un guide d'ondes en silicium sur lequel est formée une ou plusieurs jonctions PN ou PIN, en appliquant une tension modulée aux bornes de cette (ou ces jonctions) PN ou PIN. Lorsque le modulateur résonant en anneau est réalisé en technologie « photonique silicium », une jonction PN ou PIN est ainsi formée sur le guide d'ondes en anneau (le long du guide d'ondes ou transversalement au guide d'ondes). Dans le cas d'une jonction formée le long du guide d'ondes, La zone intérieure est, par exemple, en silicium dopé P (ou dopé N), et la zone extérieure de l'anneau en silicium dopé N (respectivement P).

### 6.3 - UNITE DE MODULATION PAR CHANGEMENT DE PHASE BINAIRE

Une unité de modulation par changement de phase binaire comporte une unité de modulation de type Mach-Zehnder ou un modulateur en anneau résonant.

En fonctionnement, l'unité de modulation permet d'obtenir une modulation de type BPSK pour « Binary Phase-Shift Keying », ceci signifiant modulation par changement de phase binaire en français.

De telles unités de modulation sont notamment décrites dans le document intitulé « DPSK Modulation Using a Microring Modulator », CLEO 2011, papier CTuN4 rédigé par K. Padmaraju et al.

### 6.4 - UNITE DE MODULATION FONCTIONNANT EN MULTI-LONGUEURS D'ONDE

Selon un exemple particulier, l'unité de modulation comporte deux modulateurs adaptés à fonctionner pour deux longueurs de résonance différentes.

Par exemple, les deux modulateurs sont deux modulateurs en anneau résonant dont la longueur de résonance est distincte.

## 7- EXEMPLES PARTICULIERS

### 7.1 - CAS POUR LEQUEL k = 2

Dans cette section, k est égal à 2.

Les trois approches développées précédemment pour le cas où k est pair s'appliquent ici mais, dans la suite, seule la première approche est utilisée.

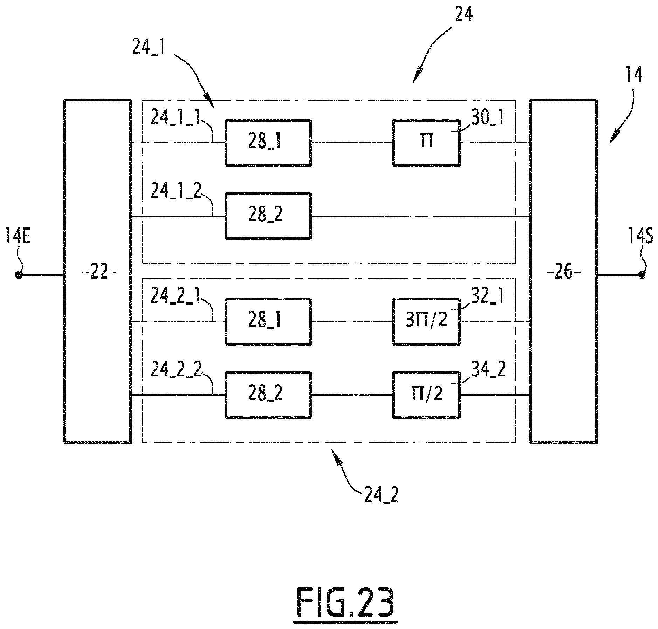

Le schéma correspondant est visible sur la figure 23.

Selon la première approche, le premier entier N1 est égal à 2, le deuxième entier N2 est égal à 1 et le troisième entier N3 est égal à 2.

Le système de modulation 14 comporte deux premières voies optiques de modulation 24_1, la première voie optique de modulation 24_1_1 qui est repérée par l'indice 1 et la première voie optique de modulation 24_1_2 qui est repérée par l'indice 2. Le système de modulation 14 comporte également deux deuxièmes voies optiques de modulation 24_2, la deuxième voie optique de modulation 24_2_1 qui est repérée par l'indice 1 et la deuxième voie optique de modulation 24_2_2 qui est repérée par l'indice 2.

La première voie optique de modulation 24_1_1 qui est repérée par l'indice 1 comporte le premier dispositif de modulation 28_1 et l'unité de déphasage de $\pi$. La première voie optique de modulation 24_1_2 qui est repérée par l'indice 2 comporte le deuxième dispositif de modulation 28_2.

La deuxième voie optique de modulation 24_2_1 qui est repérée par l'indice 1 comporte le premier dispositif de modulation 28_1 et l'unité de déphasage de $3\pi/2$. La deuxième voie optique de modulation 24_1_2 qui est repérée par l'indice 2 comporte le deuxième dispositif de modulation 28_1 et l'unité de déphasage de $\pi/2$.

Le fonctionnement du système de modulation 14 est maintenant décrit.

Chaque premier dispositif de modulation 28_1 fonctionne entre une première valeur une $V_{11}$ et une première valeur deux $V_{12}$ donnée respectivement par :

$$V_{11} = \frac{E}{2} + \frac{E}{2^1} = \frac{E}{2} + \frac{E}{2} = E$$

$$V_{12} = \frac{E}{2} - \frac{E}{2^1} = \frac{E}{2} - \frac{E}{2} = 0$$

Chaque deuxième dispositif de modulation 28_2 fonctionne entre une deuxième valeur une $V_{21}$ et une deuxième valeur deux $V_{22}$ donnée respectivement par :

$$V_{21} = \frac{E}{2} + \frac{E}{2^2} = \frac{E}{2} + \frac{E}{4} = \frac{3E}{4}$$

$$V_{22} = \frac{E}{2} - \frac{E}{2^2} = \frac{E}{2} - \frac{E}{4} = \frac{E}{4}$$

Sur les premières voies optiques, la présence de l'unité de déphasage de $\pi$ sur la première voie optique de modulation 24_1_1 repérée par l'indice 1 permet de générer des interférences constructives ou destructives. Cela permet de générer en sortie quatre niveaux d'amplitude qui sont -3E/4, -E/4, E/4 et 3E/4. Ces quatre niveaux d'amplitude sont associés à la composante réelle.

De manière symétrique, pour les deuxièmes voies optiques, la présence de l'unité de déphasage de $\pi$ sur la deuxième voie optique de modulation 24_2_1 repérée par l'indice 2 permet de générer des interférences constructives ou destructives. Cela permet de générer en sortie quatre niveaux d'amplitude qui sont -3E/4, -E/4, E/4 et 3E/4. Ces quatre niveaux d'amplitude sont associés à la composante en quadrature du fait de la présence de l'unité de déphasage de $\pi/2$. Les états associés sont donc -3E/4.j, -E/4.j, E/4.j et 3E/4.j .

Le fait de disposer de quatre valeurs selon la composante réelle et de quatre valeurs selon la composante en quadrature permet bien d'obtenir une constellation à $4^2$=16 états, c'est-à-dire la constellation représentée sur la figure 1.

## 7.2 - CAS POUR LEQUEL k = 3

Dans cette section, k est égal à 3.

Les trois approches développées précédemment pour le cas où k est impair s'appliquent ici mais, dans la suite, seule la première approche est utilisée.

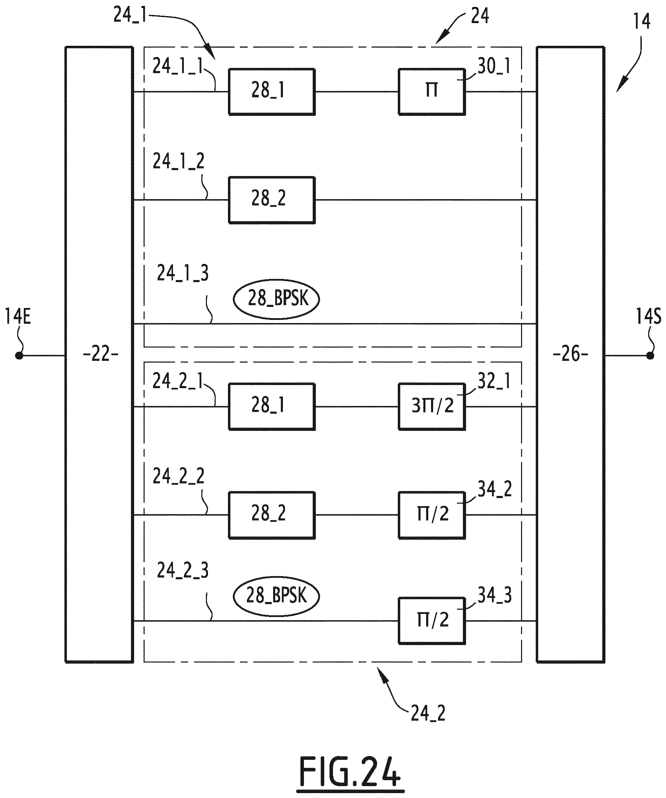

Le schéma correspondant est visible sur la figure 24.

Selon la première approche, le premier entier N1 est égal à 3, le deuxième entier N2 est égal à 1 et le troisième entier N3 est égal à 2.

Le système de modulation 14 comporte trois premières voies optiques de modulation 24_1, la première voie optique de modulation 24_1_1 qui est repérée par l'indice 1, la première voie optique de modulation 24_1_2 qui est repérée par l'indice 2 et la première voie optique de modulation 24_1_3 qui est reperée par l'indice 3.

Le système de modulation 14 comporte également trois deuxièmes voies optiques de modulation 24_2, la deuxième voie optique de modulation 24_2_1 qui est repérée par l'indice 1, la deuxième voie optique de modulation 24_2_2 qui est repérée par l'indice 2 et la troisième voie optique de modulation 24_2_3 qui est repérée par l'indice 3.

La première voie optique de modulation 24_1_1 qui est repérée par l'indice 1 comporte le premier dispositif de modulation 28_1 et la première unité de déphasage de $\pi$. La première voie optique de modulation 24_1_2 qui est repérée par l'indice 2 comporte le deuxième dispositif de modulation 28_2. La première voie optique de modulation 24_1_3 qui est repérée par l'indice 3 comporte le troisième dispositif de modulation 28_3.

La deuxième voie optique de modulation 24_2_1 qui est repérée par l'indice 1 comporte le premier dispositif de modulation 28_1 et la première unité de déphasage de $3\pi/2$. La deuxième voie optique de modulation 24_1_2 qui est repérée par l'indice 2 comporte le deuxième dispositif de modulation 28_1 et la deuxième unité de déphasage de $\pi/2$. La première voie optique de modulation 24_1_3 qui est repérée par l'indice 3 comporte le troisième dispositif de modulation 28_3 et la deuxième unité de déphasage de $\pi/2$.

Le fonctionnement du système de modulation 14 est maintenant décrit.

Chaque premier dispositif de modulation 28_1 fonctionne entre une première valeur une $V_{11}$ et une première valeur deux $V_{12}$ donnée respectivement par :

$$V_{11} =. \frac{E}{2} + \frac{E}{2^1} = \frac{E}{2} + \frac{E}{2} = E$$

$$V_{12} =. \frac{E}{2} - \frac{E}{2^1} = \frac{E}{2} - \frac{E}{2} = 0$$

Chaque deuxième dispositif de modulation 28_2 fonctionne entre une deuxième valeur une $V_{21}$ et une deuxième valeur deux $V_{22}$ donnée respectivement par :

$$V_{21} =. \frac{E}{2} + \frac{E}{2^2} = \frac{E}{2} + \frac{E}{4} = \frac{3E}{4}$$

$$V_{22} =. \frac{E}{2} - \frac{E}{2^2} = \frac{E}{2} - \frac{E}{4} = \frac{E}{4}$$

Chaque troisième dispositif 28_BPSK fonctionne entre une première valeur de E et une deuxième valeur de -E/2.

Sur les premières voies optiques, la présence de l'unité de déphasage de $\pi$ sur la première voie optique de modulation 24_1_1 repérée par l'indice 1 permet de générer des interférences constructives ou destructives. Cela permet de générer en sortie huit niveaux d'amplitude qui sont -7E/4, -5E/4, -3E/4, -E/4, E/4 et 3E/4, 5E/4 et 7E/4. Ces huit niveaux d'amplitude sont associés à la composante réelle.

De manière symétrique, pour les deuxièmes voies optiques, la présence de l'unité de déphasage de $\pi$ sur la deuxième voie optique de modulation 24_2_1 repérée par l'indice 2 permet de générer des interférences constructives ou destructives. Cela permet de générer en sortie quatre niveaux d'amplitude qui sont -7E/4, -5E/4, -3E/4, -E/4, E/4,3E/4, 5E/4 et 7E/4. Ces huit niveaux d'amplitude sont associés à la composante en quadrature du fait de la présente de l'unité de déphasage de $\pi/2$. Les état associés sont donc -7E/4.j, -5E/4.j, -3E/4.j, -E/4.j, E/4.j, 3E/4.j, 5E/4.j et 7E/4.j .

Le fait de disposer de huit valeurs selon la composante réelle et de huit valeurs selon la composante en quadrature permet bien d'obtenir une constellation à $4^3$=64 états.

*7.3 - CAS POUR LEQUEL k = 4*

Dans cette section, k est égal à 4.

Les trois approches développées précédemment pour le cas où k est pair s'appliquent ici mais, dans la suite, seule la première approche est utilisée.

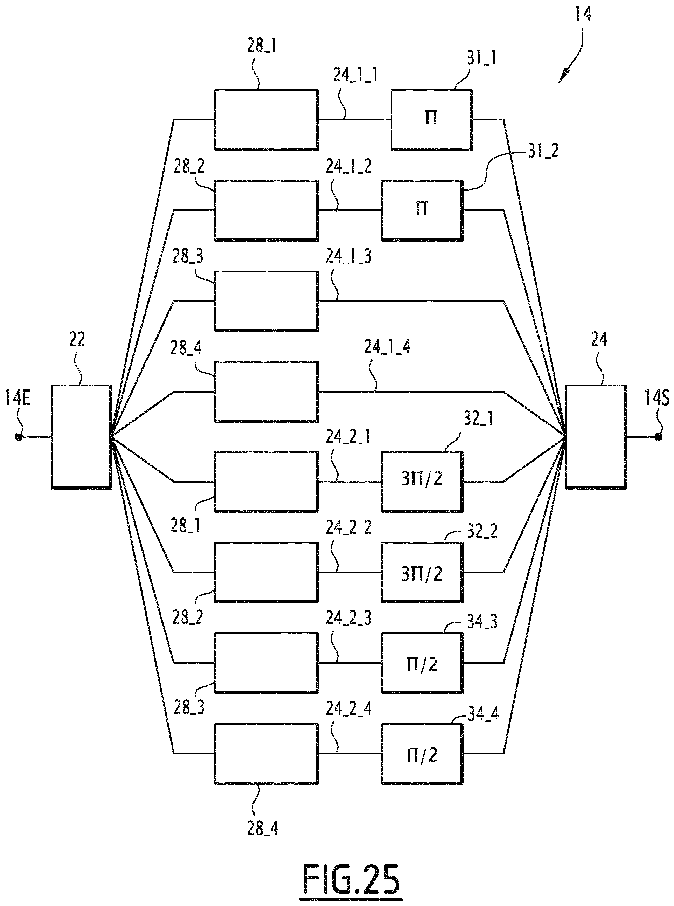

Le schéma correspondant est visible sur la figure 25.

Selon la première approche, le premier entier N1 est égal à 4, le deuxième entier N2 est égal à 2 et le troisième entier N3 est égal à 4.

Le système de modulation 14 comporte quatre premières voies optiques de modulation 24_1, la première voie optique de modulation 24_1_1 qui est repérée par l'indice 1, la première voie optique de modulation 24_1_2 qui est repérée par l'indice 2, la première voie optique de modulation 24_1_3 qui est repérée par l'indice 3 et la première voie optique de modulation 24_1_4 qui est repérée par l'indice 4. Le système de modulation 14 comporte également quatre deuxièmes voies optiques de modulation 24_2, la deuxième voie optique de modulation 24_2_1 qui est repérée par l'indice 1, la deuxième voie optique de modulation 24_2_2 qui est repérée par l'indice 2, la deuxième voie optique de modulation 24_2_3 qui est repérée par l'indice 3 et la deuxième voie optique de modulation 24_2_4 qui est repérée par l'indice 4.

La première voie optique de modulation 24_1_1 qui est repérée par l'indice 1 comporte le premier dispositif de modulation 28_1 et la première unité de déphasage de $\pi$. La première voie optique de modulation 24_1_2 qui est repérée par l'indice 2 comporte le deuxième dispositif de modulation 28_2 et la deuxième unité de déphasage de $\pi$. La première voie optique de modulation 24_1_3 qui est repérée par l'indice 3 comporte le troisième dispositif de modulation 28_3. La première voie optique de modulation 24_1_4 qui est repérée par l'indice 4 comporte le quatrième dispositif de modulation 28_4.

La deuxième voie optique de modulation 24_2_1 qui est repérée par l'indice 1 comporte le premier dispositif de modulation 28_1 et la première unité de déphasage de $3\pi/2$. La deuxième voie optique de modulation 24_2_2 qui est repérée par l'indice 2 comporte le deuxième dispositif de modulation 28_2 et la deuxième unité de déphasage de $3\pi/2$. La deuxième voie optique de modulation 24_1_3 qui est repérée par l'indice 3 comporte le troisième dispositif de modulation 28_3 et la troisième unité de déphasage de $\pi/2$. La deuxième voie optique de modulation 24_1_4 qui est repérée par l'indice 4 comporte le quatrième dispositif de modulation 28_4 et la quatrième unité de déphasage de $\pi/2$.

Le fonctionnement du système de modulation 14 est maintenant décrit.

Chaque premier dispositif de modulation 28_1 fonctionne entre une première valeur une $V_{11}$ et une première valeur deux $V_{12}$ donnée respectivement par :

$$V_{11} = \frac{E}{2} + \frac{E}{2^1} = \frac{E}{2} + \frac{E}{2} = E$$

$$V_{12} = \frac{E}{2} - \frac{E}{2^1} = \frac{E}{2} - \frac{E}{2} = 0$$

Chaque deuxième dispositif de modulation 28_2 fonctionne entre une deuxième valeur une $V_{21}$ et une deuxième valeur deux $V_{22}$ donnée respectivement par :

$$V_{21} = \frac{E}{2} + \frac{E}{2^2} = \frac{E}{2} + \frac{E}{4} = \frac{3E}{4}$$

$$PV_{22} = \frac{E}{2} - \frac{E}{2^2} = \frac{E}{2} - \frac{E}{4} = \frac{E}{4}$$

Chaque troisième dispositif de modulation 28_3 fonctionne entre une troisième valeur une $V_{31}$ et une troisième valeur deux $V_{32}$ donnée respectivement par :

$$V_{31} = \frac{E}{2} + \frac{E}{2^3} = \frac{E}{2} + \frac{E}{8} = \frac{5E}{8}$$

$$V_{32} = \frac{E}{2} - \frac{E}{2^3} = \frac{E}{2} - \frac{E}{8} = \frac{3E}{8}$$

Chaque quatrième dispositif de modulation 28_4 fonctionne entre une quatrième valeur une $V_{41}$ et une quatrième valeur deux $V_{42}$ donnée respectivement par :

$$V_{14} = \frac{E}{2} + \frac{E}{2^4} = \frac{E}{2} + \frac{E}{16} = \frac{9E}{16}$$

$$V_{24} = \cdot \frac{E}{2} - \frac{E}{2^4} = \frac{E}{2} - \frac{E}{16} = \frac{7E}{16}$$

Sur les premières voies optiques, la présence de la première unité de déphasage de $\pi$ et de la deuxième unité de déphasage de $\pi$ permettent de générer des interférences constructives ou destructives. Cela permet de générer en sortie seize niveaux d'amplitude qui sont -15E/16, -13E/16, -11E/16, -9E/16, -7E/16, -5E/16, -3E/16, -E/16, E/16, 3E/16, 5E/16, 7E/16, 9E/16, 11E/16, 13E/16 et 15E/16. Ces seize niveaux d'amplitude sont associés à la composante réelle.

De manière symétrique, sur les deuxièmes voies optiques, seize niveaux d'amplitude qui sont -15E/16, -13E/16, -11E/16, -9E/16, -7E/16, -5E/16, -3E/16, -E/16, E/16, 3E/16, 5E/16, 7E/16, 9E/16, 11E/16, 13E/16 et 15E/16 sont générés. Ces seize niveaux d'amplitude sont associés à la composante en quadrature du fait de la présence de l'unité de déphasage de $\pi/2q$. Les états associés sont donc -15E/16.j, -13E/16.j, -11E/16.j, -9E/16.j, -7E/16.j, -5E/16.j, -3E/16.j, -E/16.j, E/16.j, 3E/16.j, 5E/16.j, 7E/16.j, 9E/16.j, 11E/16.j, 13E/16.j et 15E/16.j.

Le fait de disposer de seize valeurs selon la composante réelle et de seize valeurs selon la composante en quadrature permet bien d'obtenir une constellation à 16*16 = 256 = $4^4$ états.

A partir de ces exemples particuliers, l'homme du métier comprendra qu'il est possible de généraliser pour des cas où l'entier k est supérieur strictement à 4 en utilisant un montage comprenant les éléments adaptés.

## Revendications

**1.** Système de modulation (14) propre à générer une modulation d'amplitude en quadrature multiniveaux susceptible d'être représentée par une constellation à $4^k$ états, k étant un entier positif supérieur ou égal à 2, le système de modulation (14) comprenant :

- un premier nombre (N1) de premières voies optiques (24_1), chacune des premières voies optiques (24_1) comprenant un dispositif de modulation (28) et un deuxième nombre (N2) de premières voies optiques (24_1) comportant, en outre, chacune une première unité de déphasage (30), la première unité de déphasage (30) étant propre à introduire un déphasage de $\pi$,
- un premier nombre (N1) de deuxièmes voies optiques (24_2), chacune des deuxièmes voies optiques (24_2) étant associée de manière bijective avec une des premières voies optiques (24_1), chacune des deuxièmes voies optiques (24_2) comprenant les mêmes éléments (28, 30) que la première voie optique (24_1) à laquelle la deuxième voie optique (24_2) est associée et une deuxième unité de déphasage (32), la deuxième unité de déphasage (32) étant propre à introduire un déphasage de $\pi/2$,

le premier nombre (N1) étant égal à l'entier k, et le deuxième nombre (N2) est égal au quotient de la division euclidienne de l'entier k par le nombre 2.

**2.** Système selon la revendication 1, dans lequel l'entier k est un nombre pair et dans lequel chaque dispositif de modulation (28) comporte un modulateur d'amplitude uniquement.

**3.** Système selon la revendication 1, dans lequel l'entier k est un nombre impair et dans lequel l'ensemble des dispositifs de modulation (28) du système (14) est repartie en deux sous-ensembles, chaque dispositif de modulation (28) du premier sous-ensemble étant un modulateur d'amplitude uniquement et les dispositifs de modulation (28_BPSK) du deuxième ensemble faisant partie d'une unité de modulation par changement de phase binaire, le premier sous-ensemble comportant deux fois le deuxième nombre (N2) de dispositifs de modulation (N2) et le deuxième sous-ensemble comportant deux dispositifs de modulation (28_BPSK).

4. Système selon l'une quelconque des revendications 1 à 3, dans lequel les dispositifs de modulation optique (28) appartenant aux premières voies optiques (24_1) sont ordonnées selon un ordre représentable par un indice variant entre 1 et deux fois le deuxième nombre (N2), le i-ème dispositif de modulation optique (28_i) fonctionnant entre une i-ème première valeur de modulation et une i-ème deuxième valeur de modulation, pour tout entier i variant entre 1 et deux fois le deuxième nombre (N2), les i-ème premières valeurs de modulation $V_{1i}$ et i-ème deuxième valeur de modulation $V_{2i}$ étant définies par les formules suivantes :

$$V_{1i=}\ \frac{E}{2} + \frac{E}{2^i}$$

$$V_{2i=}\ \frac{E}{2} - \frac{E}{2^i}$$

où :

- E est le champ injecté en entrée du i-ème dispositif de modulation (28_i), et
- « . » désigne la fonction multiplication.

5. Système selon l'une quelconque des revendications 1 à 4, dans lequel les dispositifs de modulation optique (28) appartenant aux deuxièmes voies optiques (24_2) sont ordonnées selon un ordre représentable par un indice variant entre 1 et deux fois le deuxième nombre (N2), le i-ème dispositif de modulation optique (28_i) fonctionnant entre une i-ème première valeur de modulation et une i-ème deuxième valeur de modulation, pour tout entier i variant entre 1 et le deux fois le deuxième nombre (N2), les i-ème premières valeurs de modulation $V_{1i}$ et i-ème deuxième valeur de modulation $V_{2i}$ étant définies par les formules suivantes :

$$V_{1i=}\ \frac{E}{2} + \frac{E}{2^i}$$

$$V_{2i=}\ \frac{E}{2} - \frac{E}{2^i}$$

où :

- E est le champ injecté en entrée du i-ème dispositif de modulation (28_i), et
- « . » désigne la fonction multiplication.

6. Système selon l'une quelconque des revendications 1 à 5, dans lequel chaque dispositif de modulation optique (28) comporte un modulateur de Mach-Zehnder ou un modulateur à électro-absorption.

7. Système selon l'une quelconque des revendications 1 à 6, dans lequel chaque dispositif de modulation optique (28) comporte une unité (210) de génération d'une modulation d'un signal optique, l'unité (210) comprenant :

- un premier modulateur (212A) en anneau résonant comportant :

    - un premier guide d'ondes (214A) présentant une entrée (220A) et une sortie (222A),
    - un premier guide d'ondes en anneau (216A), dit premier anneau, le premier anneau (216A) étant couplé optiquement au premier guide d'ondes (214A) et présentant un premier indice effectif (Neff1), et
    - un premier dispositif de commande (218A) propre à moduler le premier indice effectif (Neff1) du premier anneau (216A) selon une première loi de commande (L1), et

- un deuxième modulateur en anneau résonant comportant :

    - un deuxième guide d'ondes (214B) présentant une entrée (220B) et une sortie (222B), l'entrée (220B) du deuxième guide d'ondes (214B) étant reliée à la sortie (222B) du premier guide d'ondes (214A),

- un deuxième guide d'ondes en anneau (216B), dit deuxième anneau, le deuxième anneau (216B) étant couplé optiquement au deuxième guide d'ondes (214B) et présentant un deuxième indice effectif (Neff2), et étant indépendant du premier anneau (216A), et
- un premier dispositif de commande (218B) propre à moduler le deuxième indice effectif (Neff2) du deuxième anneau (216B) selon une deuxième loi de commande (L2),

l'unité de modulation (210) présentant au moins une caractéristique influençant le chirp introduit par l'unité de modulation (210), les caractéristiques de l'unité de modulation (210) étant choisie de sorte à minimiser la valeur absolue du chirp introduit par l'unité de modulation (210).

8. Système selon l'une quelconque des revendications 1 à 7, dans lequel le dispositif de modulation (28) comporte au moins deux unités de modulation propres à fonctionner à deux longueurs d'onde distinctes.

9. Système selon l'une quelconque des revendications 1 à 8, dans lequel l'entier k est égal à 2, 3 ou 4.

10. Architecture (10) comportant :

- une source optique (12),
- un système de modulation (14) selon l'une quelconque des revendications 1 à 9, la source optique (12) étant propre à illuminer le système de modulation (14).

**Patentansprüche**

1. Modulationssystem (14), geeignet zum Erzeugen einer Mehrpegelquadraturamplitudenmodulation, die durch eine Konstellation mit $4^k$ Zuständen reprästentiert werden kann, wobei k eine ganze Zahl größer oder gleich 2 ist, wobei das Modulationssystem (14) aufweist:

- eine erste Anzahl (N1) von ersten optischen Pfaden (24_1), wobei jeder der ersten optischen Pfade (24_1) eine Modulationsvorrichtung (28) aufweist, und eine zweite Anzahl (N2) von ersten optischen Pfaden (24_1), die außerdem jeder eine erste Phasenverschiebungseinheit (30) aufweisen, wobei die erste Phasenverschiebungseinheit (30) zum Einführen einer Phasenverschiebung von $\pi$ geeignet ist,
- eine erste Anzahl (N1) von zweiten optischen Pfaden (24_2), wobei jeder der zweiten optischen Pfade (24_2) auf bijektive Art mit einem der ersten optischen Pfade (24_1) assoziiert ist, wobei jeder der zweiten optischen Pfade (24_2) dieselben Elemente (28, 30) wie der erste optische Pfad (24_1), mit dem der zweite optische Pfade (24_2) assoziiert ist, und eine zweite Phasenverschiebungseinheit (32) aufweist, wobei die zweite Phasenverschiebungseinheit (32) zum Einführen einer Phasenverschiebung von $\pi/2$ geeignet ist,

wobei die erste Anzahl (N1) gleich der ganzen Zahl k ist und die zweite Anzahl (N2) gleich dem Quotienten der Division mit Rest der ganzen Zahl k durch die Zahl 2 ist.

2. System gemäß dem Anspruch 1, wobei die ganze Zahl k eine gerade Zahl ist und in dem jede Modulationsvorrichtung (28) einzig einen Amplitudenmodulator aufweist.

3. System gemäß Anspruch 1, in dem die ganze Zahl k eine ungerade Zahl ist und in dem die Menge von Modulationsvorrichtungen (28) des Systems (14) in zwei Teilmengen unterteilt ist, wobei jede Modulationsvorrichtung (28) der ersten Teilmenge einzig ein Amplitudenmodulator ist und die Modulationsvorrichtungen (28_BPSK) der zweiten Menge einen Teil einer Binäre-Phasenumtastung-Modulationseinheit bilden, wobei die erste Teilmenge zwei Mal die zweite Anzahl (N2) von Modulationsvorrichtungen (N2) aufweist und die zweite Teilmenge zwei Modulationsvorrichtungen (28_BPSK) aufweist.

4. System gemäß einem der Ansprüche 1 bis 3, in dem die Vorrichtungen zur optischen Modulation (28), die zu den ersten optischen Pfaden (24_1) gehören, gemäß einer Reihenfolge angeordnet sind, die durch einen Index repräsentiert werden kann, der zwischen 1 und zwei Mal der zweiten Anzahl (N2) variiert, wobei die i-te Vorrichtung zur optischen Modulation (28_i) zwischen einem i-ten ersten Modulationswert und einem i-ten zweiten Modulationswert, für jede ganze Zahl i, die zwischen 1 und zwei Mal der zweiten Anzahl (N2) variiert, arbeitet, wobei die i-ten ersten Modulationswerte $V_{1i}$ und der i-te zweite Modulationswert $V_{2i}$ durch die folgenden Formeln definiert sind:

$$V_{1i} = \frac{E}{2} + \frac{E}{2^i}$$

$$V_{2i} = \frac{E}{2} - \frac{E}{2^i}$$

wobei:

- E das am Eingang der i-ten Modulationsvorrichtung (28_i) injizierte Feld ist und
- "." die Multiplikations-Funktion bezeichnet.

5. System gemäß einem der Ansprüche 1 bis 4, in dem die Vorrichtungen zur optischen Modulation (28), die zu den zweiten optischen Pfaden (24_2) gehören, gemäß einer Reihenfolge angeordnet sind, die durch einen Index repräsentiert werden kann, der zwischen 1 und zwei Mal der zweiten Anzahl (N2) variiert, wobei die i-te Vorrichtung zur optischen Modulation (28_i) zwischen einem i-ten ersten Modulationswert und einem i-ten zweiten Modulationswert, für jede ganze Zahl i, die zwischen 1 und zwei Mal der zweiten Anzahl (N2) variiert, arbeitet, wobei die i-ten ersten Modulationswerte $V_{1i}$ und der i-te zweite Modulationswert $V_{2i}$ durch die folgenden Formeln definiert sind:

$$V_{1i} = \frac{E}{2} + \frac{E}{2^i}$$

$$V_{2i} = \frac{E}{2} - \frac{E}{2^i}$$

wobei:

- E das am Eingang der i-ten Modulationsvorrichtung (28_i) injizierte Feld ist und
- "." die Multiplikations-Funktion bezeichnet.

6. System gemäß einem der Ansprüche 1 bis 5, in dem jede Vorrichtung zur optischen Modulation (28) einen Mach-Zehnder-Modulator oder einen Elektroabsorptionsmodulator aufweist.

7. System gemäß einem der Ansprüche 1 bis 6, in dem jede Vorrichtung zur optischen Modulation (28) eine Einheit (210) zum Erzeugen einer Modulation eines optischen Signals aufweist, wobei die Einheit (210) aufweist:

- einen ersten Resonanzring-Modulator (212A) aufweisend:

  - einen ersten Wellenleiter (214A), der einen Eingang (220A) und einen Ausgang (222A) aufweist,
  - einen ersten Ring-Wellenleiter (216A), bezeichnet als erster Ring, wobei der erste Ring (216A) optisch mit dem ersten Wellenleiter (214A) gekoppelt ist und einen ersten effektiven Index (Neff1) hat und
  - eine erste Steuervorrichtung (218A), geeignet zum Modulieren des ersten effektiven Index (Neff1) des ersten Rings (216A) gemäß einer ersten Steuervorschrift (L1) und

- einen zweiten Resonanzring-Modulator aufweisend:

  - einen zweiten Wellenleiter (214B) mit einem Eingang (220B) und einem Ausgang (222B), wobei der Eingang (220B) des zweiten Wellenleiters (214B) mit dem Ausgang (222B) des ersten Wellenleiters (214A) verbunden ist,
  - einen zweiten Ring-Wellenleiter (216B), bezeichnet als zweiter Ring, wobei der zweite Ring (216B) optisch mit dem zweiten Wellenleiter (214B) gekoppelt ist und einen zweiten effektiven Index (Neff2) aufweist und unabhängig von dem ersten Ring (216A) ist und
  - eine erste Steuervorrichtung (218B), geeignet zum Modulieren des zweiten effektiven Index (Neff2) des zweiten Rings (216B) gemäß einer zweiten Steuervorschrift (L2),

wobei die Modulationseinheit (210) mindestens eine Eigenschaft hat, die den Chirp, der durch die Modulationseinheit (210) eingeführt wird, beeinflusst, wobei die Eigenschaften der Modulationseinheit (210) derart gewählt werden, dass der Absolutbetrag des durch die Modulationseinheit (210) eingeführten Chirps minimiert wird.

**8.** System gemäß einem der Ansprüche 1 bis 7, in dem die Modulationsvorrichtung (28) mindestens zwei Modulationseinheiten aufweist, die dazu geeignet sind, bei zwei unterschiedlichen Wellenlängen zu arbeiten.

**9.** System gemäß einem der Ansprüche 1 bis 8, in dem die ganze Zahl k gleich 2, 3 oder 4 ist.

**10.** Architektur (10) aufweisend:

- eine optische Quelle (12),
- ein Modulationssystem (14) gemäß einem der Ansprüche 1 bis 9, wobei die optische Quelle (12) dazu geeignet ist, das Modulationssystem (14) zu beleuchten.

**Claims**

**1.** A modulating system (14) adapted to generate a multi-level quadrature amplitude modulation that can be shown by a constellation with $4^k$ states, k being a positive integer greater than or equal to 2, the modulating system (14) comprising:

- a first number (N1) of first optical channels (24_1), each of the first optical channels (24_1) comprising a modulating device (28), and a second number (N2) of first optical channels (24_1) further each including a first phase shifting unit (30), the first phase shifting unit (30) being capable of introducing a phase shift of $\pi$,
- a first number (N1) of second optical channels (24_2), each of the second optical channels (24_2) being associated bijectively with one of the first optical channels (24_1), each of the second optical channels (24_2) comprising the same elements (28, 30) as the first optical channel (24_1) with which the second optical channel (24_2) is associated and a second phase shifting unit (32), the second phase shifting unit (32) being able to introduce a phase shift of $\pi/2$,

the first number (N1) being equal to the integer k, and the second number is equal to the quotient of the Euclidean division of the integer k by the number 2.

**2.** The system according to claim 1, wherein the integer k is an even number and wherein each modulating device (28) includes an amplitude modulator only.

**3.** The system according to claim 1, wherein the integer k is an odd number and wherein the assembly of modulating devices (28) of the system is divided into two subassemblies, each modulating device (28) of the first subassembly being an amplitude modulator only and the modulating devices (28_BPSK) of the second assembly being part of a binary phase change modulation unit, the first subassembly including two times the second number (N2) of modulating devices (N2) and the second subassembly including two modulating devices (28_BPSK).

**4.** The system according to any one of claims 1 to 3, wherein the optical modulating devices (28) belonging to the first optical channels (24_i) are sequenced in a sequence that can be represented by an index varying between 1 and two times the second number (N2), the i-th optical modulating device (28_i) working between an i-th first modulation value and an i-th second modulation value, for any integer i varying between 1 and two times the second number (N2), the i-th first modulation values $V_{1i}$ and i-th second modulation values $V_{2i}$ being defined by the following formulas:

$$V_{1i=} \frac{E}{2} + \frac{E}{2^i}$$

$$V_{2i=} \frac{E}{2} - \frac{E}{2^i}$$

where:

• E is the field injected at the input of the i-th modulation device, and
• "." designates the multiplication function.

5. The system according to any one of claims 1 to 4, wherein the optical modulating devices (28) belonging to the second optical channels (24_2) are sequenced in a sequence that can be represented by an index varying between 1 and two times the second number (N2), the i-th optical modulating device (28_i) working between an i-th first modulation value and an i-th second modulation value, for any integer i varying between 1 and two times the second number (N2), the i-th first modulation values $V_{1i}$ and i-th second modulation values $V_{2i}$ being defined by the following formulas:

$$V_{1i=} \frac{E}{2} + \frac{E}{2^i}$$

$$V_{2i=} \frac{E}{2} - \frac{E}{2^i}$$

where:

• E is the field injected at the input of the i-th modulation device, and
• "." designates the multiplication function.

6. The system according to any one of claims 1 to 5, wherein each optical modulating device (28) includes a Mach-Zehnder modulator or an electro-absorption modulator.

7. The system according to according to any one of claims 1 to 6, wherein each optical modulating device (28) includes a unit (210) generating a modulation of an optical signal, the unit (210) comprising:

- a first resonant ring modulator (212A) including:

- a first waveguide (214A) having an input (220A) and an output (222A),
- a first ring waveguide (216A), called first ring, the first ring (216A) being optically coupled to the first waveguide (214A) and having a first effective index (Neff1), and
- a first control device (218A) able to modulate the first effective index (Neff1) of the first ring (216A) according to a first control law (L1), and

- a second resonant ring modulator including:

- a second waveguide (214B) having an input (220B) and an output (222B), the input of the second waveguide (214B) being connected to the output (222B) of the first waveguide (214A),
- a second ring waveguide (216B), called second ring, the second ring (216B) being optically coupled to the second waveguide (214B) and having a second effective index (Neff2), and being independent of the first ring (216A), and
- a second control device (216B) able to modulate the second effective index (Neff2) of the second ring (216B) according to a second control law (L2),

the modulation unit (210) having at least one characteristic influencing the chirp introduced by the modulation unit (210), the characteristics of the modulation unit (210) being chosen so as to minimize the absolute value of the chirp introduced by the modulation unit (210).

8. The system according to any one of claims 1 to 7, wherein the modulating device (28) includes at least two modulation units able to operate on two different wavelengths.

9. The system according to any one of claims 1 to 8, wherein the integer k is equal to 2, 3 or 4.

10. An architecture (10) including:

- an optical source (12),
- a modulating system (14) according to any one of claims 1 to 9, the optical source (12) being able to illuminate the modulating system (14).

FIG.1

FIG.2

FIG.3

FIG.4

FIG.5

FIG.6

EP 3 065 315 B1

FIG.7

-300-

-302-

-304-

## FIG.8

Tension
appliquée

2A ┄┄┄┄┄┄┄┄┄

A

0    T/2    T         2T          3T    Temps

—312

—310

## FIG.9

FIG.10

FIG.11

FIG.12

EP 3 065 315 B1

FIG.13

FIG.14

FIG.15

FIG.16

## FIG.17

## FIG.18

$\lambda = \lambda_0$

FIG.19

FIG.20

FIG.21

## FIG.22

**FIG.23**

<u>FIG.24</u>

FIG.25

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20140328601 A

**Littérature non-brevet citée dans la description**

- 224-Gb/S PDM-16-QAM Modulator and Receiver based on Silicon Photonic Integrated Circuits. *OFC NOFOEC,* 2013
- **Y. EHRLICHMAN et al.** Generating arbitrary optical signal constellations using microring resonators. *journal Optics Express,* Février 2013, vol. 21 (3), 3791-3799
- **R INTEGLIA et al.** Parallel-coupled dual racetrack silicon resonators for quadrature amplitude modulation. *Optics express,* 2011, vol. 19 (16), 14 892-14902

- **M. SEIMETZ.** High-Order Modulation for Optical Fiber Transmission. Springer, 2009
- **SASIKANTH MANIPATRUNI.** Ultra-low voltage, ultra-small mode volume silicon microring modulator. *OPTICS EXPRESS,* 16 Août 2010, vol. 18 (17
- **LIN ZHANG.** Silicon-Based Microring Resonator Modulators for Intensity Modulation. *IEEE JOURNAL OF SELECTED TOPICS IN QUANTUM ELECTRONICS,* Janvier 2010, vol. 16 (1
- **K. PADMARAJU.** DPSK Modulation Using a Microring Modulator. *CLEO,* 2011